(19) Europäisches Patentamt
European Patent Office
Office européen des brevets

(11) Veröffentlichungsnummer: **0 164 018**
**B1**

(12) **EUROPÄISCHE PATENTSCHRIFT**

(45) Veröffentlichungstag der Patentschrift: **31.10.90**

(21) Anmeldenummer: **85106253.9**

(22) Anmeldetag: **22.05.85**

(51) Int. Cl.$^5$: **C 09 B 11/10,** C 07 D 239/82, B 41 M 5/00

(54) **Chromogene 4,4-Diaryl-dihydrochinazolone, ihre Herstellung und Verwendung.**

(30) Priorität: **04.06.84 DE 3420799**

(43) Veröffentlichungstag der Anmeldung: **11.12.85 Patentblatt 85/50**

(45) Bekanntmachung des Hinweises auf die Patenterteilung: **31.10.90 Patentblatt 90/44**

(84) Benannte Vertragsstaaten: **CH DE FR GB LI**

(56) Entgegenhaltungen: **US-A-4 074 050**

(73) Patentinhaber: **BAYER AG**
**D-5090 Leverkusen 1 Bayerwerk (DE)**

(72) Erfinder: **Berneth, Horst, Dr.**
**Erfurter Strasse 1**
**D-5090 Leverkusen 1 (DE)**
Erfinder: **Brack, Alfred, Dr.**
**Auf dem Krahwinkel 7**
**D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 164 018 B1

**Beschreibung**

Gegenstand der Erfindung sind chromogene, 4,4-Diaryl-dihydrochinazolone der Formel

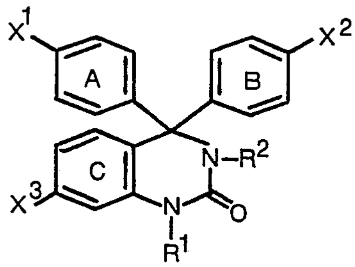

(I),

worin

$X^1$, $X^2$ und $X^3$ unabhängig voneinander Wasserstoff, Halogen, Alkyl, Ayl, Alkanoylamino, Aroylamino, $NY^1Y^2$, $OY^3$ oder $SY^3$, wobei wenigstens einer der Reste

$X^1$, $X^2$ oder $X^3$ für $NY^1Y^2$, $OY^3$ oder $SY^3$ steht,

$R^1$ Wasserstoff, Alkyl, Cycloalkyl, Aralkyl Aryl,

$R^2$ Wasserstoff, Alkyl, Cycloalkyl, Aralkyl, Aryl, Heteroalkyl oder Hetaryl,

$Y^1$, $Y^2$ und $Y^3$ unabhängig voneinander Wasserstoff, Alkyl, Cycloalkyl, Aralkyl oder Aryl oder die restlichen Glieder eines zu einem der o-ständigen Benzol-C-Atome reichenden, gegenbenenfalls weitere Heteroatome enthaltenden 5- oder 6-gliedrigen Ringes oder

$Y^1 + Y^2$ die restlichen Glieder eines gegenbenenfalls weitere Heteroatome enthaltenden 5- oder 6-gliedrigen Ringes bedeuten und

die Ringe A, B und C sowie die genannten Reste durch Halogen, Hydroxy, Alkoxy, Aryloxy, Aralkoxy, Hetaryloxy, Aryl, Hetaryl, Alkylmercapto, Arylmercapto, Aralkylmercapto, Alkylsulfonyl, Cyan, Carbamoyl, Alkoxycarbonyl, gegenbenenfalls durch 1 oder 2 Alkyl-, Aryl- oder Aralkylgruppen substituiertes Amino, Alkenyloxy, Alkylcarbonyloxy oder Arylcarbonyloxy und die Ringe A, B und C außerdem durch Alkyl, Aralkyl, Nitro, Alkenyl oder Arylvinyl substituiert sein können.

ihre Herstellung und ihre Verwendung in druckkopierfähigen und thermoreaktiven Aufzeichnungsmaterialien.

Aus der US—A—4 074 050 sind bereits ähnliche Triphenylmethanabkömmlinge bekannt, die jedoch anstelle des charakteristischen Dihydrochinazolon-Rings eine Benzoxazinonstruktur aufweisen.

Bevorzugt stehen Alkyl für $C_1$—$C_{30}$-Alkyl, insbesondere für $C_1$—$C_{12}$-Alkyl und ganz besonders für $C_1$—$C_4$-Alkyl, und Alkenyl für $C_2$—$C_5$-Alkenyl.

Unter Halogen ist im besonderen Chlor und Brom zu verstehen.

Die Alkylreste und die Alkylreste in Alkoxy-, Alkylthio-, Dialkylamino-, Alkanoylamino-, Alkylsulfonyl- und Alkoxycarbonylgruppen können verzweigt und beispielsweise durch Fluor, Chlor, $C_1$- bis $C_4$-Alkoxy, Cyano oder $C_1$—$C_4$-Alkoxycarbonyl substituiert sein; besondere Beispiele sind Methyl, Ethyl, Propyl, 2-Propyl, 2,2-Dimethylpropyl, 2-Butyl, 1-Hexyl, 1-Octyl, 1-Dodecyl, 1-Tetradecyl, 1-Hexadecyl, 1-Octadecyl, 2-Bornyl-methyl, 2-Chlor-ethyl, 2-Cyanoethyl, 2-Methoxy-ethyl, 2-Ethoxycarbonylethyl, Trifluoromethyl.

Insbesondere werden unter Cycloalkyl Cyclohexyl, unter Aryl Phenyl und Naphthyl, unter Aralkyl Benzyl und Phenethyl, unter Hetaryl Pyridyl, Pyrimidyl, Pyrazinyl, Triazinyl, Imidazolyl, Oxazolyl, Thiazolyl, Triazolyl, Thiadiazolyl oder Tetrazolyl, die benzanelliert sein können, und unter Hetaralkyl die genannten Ringe oder Ringsysteme, die über Methylen oder Ethylen an Stickstoff gebunden sind, verstanden. Die Ringe können durch nichtionische Substituenten, insbesondere durch $C_1$—$C_4$-Alkyl, $C_1$—$C_4$-Alkoxy, Cyan, Nitro oder Halogen substituiert sein.

Die Phenyl- und Naphthylreste und die Reste in Benzyl- oder Benzoylaminogruppen können bis zu 3 gleiche oder verschiedene Reste tragen.

Besondere Beispiele für substituierte Phenylreste sind 2-, 3- oder 4-Tolyl, 2-, 3- oder 4-Anisyl, 2-, 3- oder 4-Chlorphenyl, 2-, 3- oder 4-Nitro-phenyl, 2-, 3- oder Cyano-phenyl, 2-, 3- oder 4-Ethoxycarbonyl-phenyl, 2-, 3- oder 4-Methoxysulfonyl-phenyl, 2-, 3- oder 4-Trifluormethylphenyl, 2,3-Dinitrophenyl, 3,4-Dimethylphenyl, 2-Chlor-4-nitro-phenyl, 3-Chlor-4-nitro-phenyl, 5-Chlor-2-methyl-4-nitro-phenyl, 4-Chlor-3-methyl-phenyl, 3-Chlor-4-methoxyphenyl, 3-Chlor-4-trifluormethyl-phenyl, 3,4-Dicyanophenyl, 2,5-Dichlor-4-cyano-phenyl, 2-Methyl-1-naphthyl.

Die heterocyclischen Reste können bis zu 3 gleiche oder verschiedene Reste tragen. Besondere Beispiele für substituierte heterocyclische Reste sind 2-Methyl-4-pyridyl, 4-Nitro-2-pyridyl, 4-Phenyl-thiazol-2-yl, 5-Methylbenzoxazolyl, 5-tert.-Butyl-benzthiazolyl, Dimethoxytriazyl, Trichlorpyrimidyl.

Bevorzugtes Alkanoyl sind Acetyl und Propionyl, und bevorzugtes Aroyl ist Benzoyl.

Von den Verbindungen der Formel (I) sind die Verbindungen der Formel

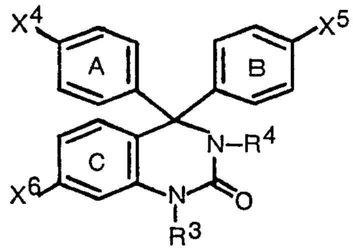

(II)

besonders zu nennen, worin

einer der Reste $X^4$, $X^5$ oder $X^6$ für $NY^4Y^5$ steht und die anderen unabhängig voneinander Wasserstoff, Halogen, $C_1$- bis $C_{12}$-Alkyl, gegebenenfalls durch Chlor und/oder $C_1$- bis $C_{12}$-Alkyl substituiertes Phenyl, $C_1$- bis $C_{12}$-Alkanoylamino, gegebenenfalls durch Chlor und/oder $C_1$- bis $C_{12}$-Alkyl substituiertes Benzoylamino, $NY^4Y^5$, $OY^6$ oder $SY^6$,

$R^3$ Wasserstoff, $C_1$- bis $C_{12}$-Alkyl, Cyclohexyl oder gegebenenfalls durch Chlor und/oder $C_1$—$C_4$-Alkyl substituierte Benzyl- oder Phenylreste,

$R^4$ Wasserstoff, gegebenenfalls Chlor, Cyano, $C_1$- bis $C_4$-Alkoxycarbonyl und/oder $C_1$- bis $C_4$-Alkoxy tragendes $C_1$- bis $C_{30}$-Alkyl, gegebenenfalls Chlor und/oder $C_1$- bis $C_4$-Alkyl tragendes Cyclohexyl, gegebenenfalls Nitro, Chlor, $C_1$- bis $C_4$-Alkyl und/oder $C_1$- bis $C_4$-Alkoxy tragendes Benzyl, gegebenenfalls Chlor, Brom, Nitro, $C_1$- bis $C_4$-Alkyl, $C_1$- bis $C_4$-Alkoxy, $C_1$- bis $C_4$-Alkylthio, Mono- oder Di-$C_1$- bis $C_4$-Dialkylamino, $C_1$- bis $C_4$-Alkylsulfonyl, Cyano und/oder $C_1$- bis $C_4$-Alkoxycarbonyl tragende Phenyl-, Naphthyl-, Picolyl-, Pyridyl-, Pyrimidyl-, Pyrazinyl-, Triazinyl-, Triazolyl-, Thiadiazolyl-, Tetrazolyl-, gegebenenfalls benzanellierte Imidazol-, Oxazol- oder Thiazolreste,

$Y^4$, $Y^5$ und $Y^6$ unabhängig voneinander Wasserstoff, gegebenenfalls durch Chlor, Cyano, $C_1$- bis $C_4$-Alkoxycarbonyl oder $C_1$- bis $C_4$-Alkoxy substituiertes $C_1$- bis $C_8$-Alkyl, Cyclohexyl oder Phenyl oder Benzyl, die durch Chlor, $C_1$- bis $C_4$-Alkyl oder $C_1$- bis $C_4$-Alkoxy substituiert sein können, oder Glieder, die zur Vervollständigung eines Ringsystemes der folgenden Formeln

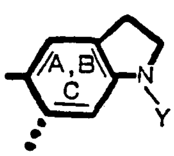 , 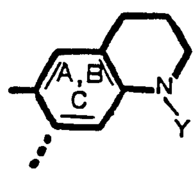 , 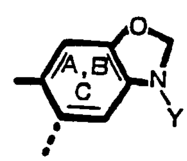 , 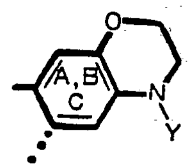

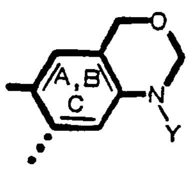 , 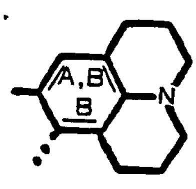 , 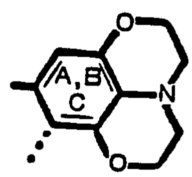 , 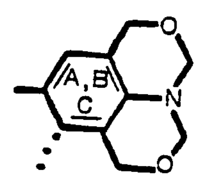

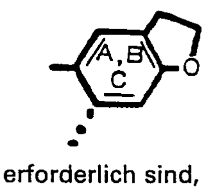 , 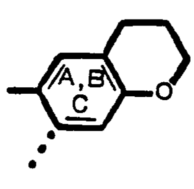 , 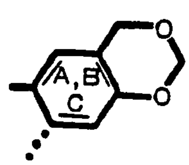 , 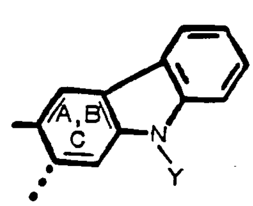

erforderlich sind, bedeuten, worin

die gestrichelte Linie die weitere Anellierung im Fall von Ring C bedeutet,

Y für Wasserstoff, gegebenenfalls durch Chlor, Cyano, $C_1$- bis $C_4$-Alkoxycarbonyl oder $C_1$- bis $C_4$-Alkoxy substituiertes $C_1$- bis $C_8$-Alkyl, Cyclohexyl oder Phenyl oder Benzyl, die durch Chlor, $C_1$- bis $C_4$-Alkyl oder $C_1$- bis $C_4$-Alkoxy substituiert sein können, steht,

der gesättigte Ringeteil bis zu 4 Reste aus der Gruppe Chlor, $C_1$- bis $C_4$-Alkyl, $C_1$- bis $C_4$-Alkoxy und Phenyl tragen kann,

die Ringe A, B, C durch Chlor, $C_1$- bis $C_4$-Alkyl, $C_1$- bis $C_4$-Alkoxy und/oder $C_1$- bis $C_4$-Alkanoylamino substituiert sein können, oder

$NY^4Y^5$ einen gegebenenfalls durch Chlor, $C_1$- bis $C_4$-Alkyl oder Aryl, insbesondere Phenyl, substituierten Pyrrolo-, Pyrrolidino-, Piperidino-, Pipecolino-, Morpholino-, Pyrazolo- oder Pyrazolinorest bedeutet.

Beispiele für im gesättigten Ring substituierte Reste sind:

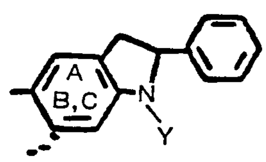 , 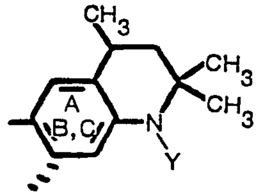 , 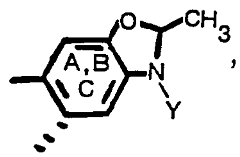 ,

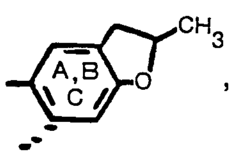 , 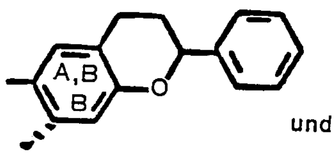 und 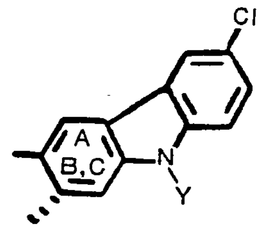

In bevorzugten Verbindungen der Formel (II) stehen zwei der Reste $X^4$, $X^5$ oder $X^6$ für $NY^4Y^5$, sowie $X^4$, $X^5$ bzw. $X^6$ für $X^{4'}$, $X^{5'}$ bzw. $X^{6'}$ = Wasserstoff, Chlor, Brom, $C_1$- bis $C_4$-Alkyl, gegebenenfalls durch Chlor und/oder $C_1$- bis $C_4$-Alkyl substituiertes Phenyl, $C_1$- bis $C_4$-Alkanoylamino, gegebenenfalls durch Chlor und/oder $C_1$- bis $C_4$-Alkyl substituiertes Benzoylamino, $OY^{6'}$ oder $SY^{6'}$,

$R^3$ für $R^{3'}$ = Wasserstoff oder $C_1$—$C_4$-Alkyl,

$R^4$ für $R^{4'}$ = Wasserstoff, gegebenenfalls Chlor oder $C_1$- bis $C_4$-Alkoxy tragendes $C_1$- bis $C_{12}$-Alkyl, Cyclohexyl, gegebenenfalls Chlor und/oder $C_1$-bis $C_4$-Alkyl tragendes Benzyl, gegebenenfalls Chlor, Brom, Nitro, $C_1$- bis $C_4$-Alkyl, $C_1$- bis $C_4$-Alkoxy, $C_1$- bis $C_4$-Alkylthio, $C_1$- bis $C_4$-Dialkylamino, $C_1$- bis $C_4$-Alkylsulfonyl, Cyano und/oder $C_1$- bis $C_4$-Alkoxycarbonyl tragende Phenyl-, Naphthyl-, Picolyl-, Pyridyl-, Pyrimidyl-, Pyrazinyl-, Triazinyl-, Triazolyl-, Thiadiazolyl-, Tetrazolyl-, gegenbenefalls benzanellierte Imidazol-, Oxazol-, oder Thiazolreste,

$Y^4$, $Y^5$ bzw. $Y^6$ für $Y^{4'}$, $Y^{5'}$ bzw. $Y^{6'}$ = unabhängig voneinander Wasserstoff, durch Chlor, Cyano, Methoxycarbonyl, Methoxy oder Ethoxy substituiertes $C_1$—$C_4$-Alkyl, Cyclohexyl, Benzyl oder Phenyl, die durch Chlor, Methyl oder Methoxy substituiert sein können, oder

$Y^{4'}$, $Y^{5'}$ und $Y^{6'}$ stehen für Glieder, die zu den unter

$Y^4$, $Y^5$ und $Y^6$ aufgeführten Ringsystemen erforderlich sind.

Ganz besonders zu nennen sind 4,4-Diaryl-dihydrochinazolone der Formel

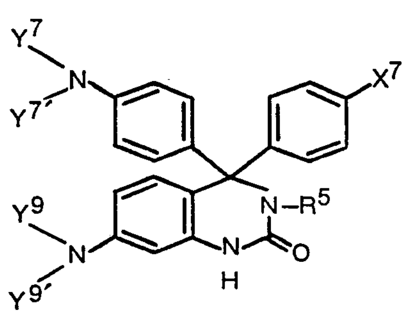

(III)

worin

$R^5$ Methyl, Ethyl, 1-Propyl, 2-Propyl, 2-Methyl-1-propyl, 1-Butyl, 2-Butyl, 2,2-Dimethyl-1-propyl, 1-Pentyl, 2-Pentyl, 1-Hexyl, 1-Dodecy, 1-Tetradecyl, 1-Hexadecyl, 1-Octadecyl, 2-Bornylmethyl, Cyclohexyl, Benzyl, Phenyl, 2-, 3- oder 4-Toly, 2-, 3- oder 4-Anisyl, 2-, 3- oder 4-Chlor-phenyl, 2-, 3- oder 4-Nitro-phenyl, 2-, 3- oder 4-Cyano-phenyl, 2-, 3- oder 4-Trifluormethyl-phenyl, 3- oder 4-Methoxycarbonylphenyl, 3- oder 4-Methoxysulfonyl-phenyl, 2,4-Dinitro-phenyl, 3-Chlor-4-trifluormethyl-phenyl, 2-Chlor-4-nitrophenyl, 3-Chlor-4-nitro-phenyl, 5-Chlor-2-methyl-4-nitro-phenyl, 4-Chlor-3-methyl-phenyl, 3,4-Dicyano-phenyl, 2,5-Dichlor-4-cyanophenyl, 4-Pyridyl, Benzthiazolyl, 5-Methyl-benzoxazolyl, 4,5,6-Trichlor-2-pyrimidyl,

$X^7$ $NY^8Y^{8'}$ oder Wasserstoff, Methoxy, Ethoxy, Propoxy, Benzyloxy, Methylthio oder Ethylthio,

$Y^7$ bis $Y^9$ Methyl, Ethyl, Cyanethyl, Methoxyethyl, Methoxycarbonylethyl, Benzyl oder Phenyl und

$Y^{7'}$ bis $Y^{9'}$ Wasserstoff, Methyl, Ethyl, Cyanethyl, Methoxyethyl, Methoxycarbonylethyl, Benzyl oder Phenyl bedeuten.

Wichtige Beispiele für Verbindungen der Formel (III) sind solche, bei denen

$R^5$ 2-Propyl, 2-Butyl, Cyclohexyl, Phenyl, 2- oder 4-Nitro-phenyl, 2-Chlor-4-nitro-phenyl, 4-Ethoxycarbonyl, 4-Methoxysulfonyl-phenyl, 3,4-Dicyano-phenyl, 2,5-Dichlor-4-cyano-phenyl, 3-Chlor-4-trifluormethyl-phenyl, 4-Pyridyl oder Benzthiazolyl bedeutet.

Ebenfalls ganz besonders zu nennen sind 4,4-Diaryl-dihydrochinazolone der Formel

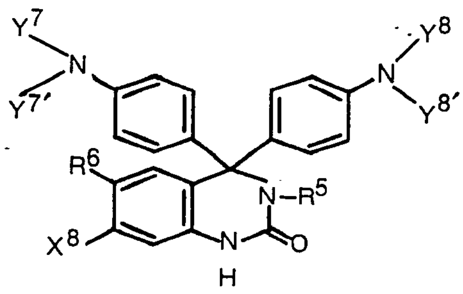

(IV)

worin

$R^6$ Wasserstoff, Chlor, Methyl oder Methoxy und

$X^8$ Wasserstoff, Chlor, Methyl, Ethyl, Propyl, Butyl, Benzyl, Methoxy, Ethoxy, Propoxy, Benzyloxy, Methylthio, Ethylthio, Acetylamino, Benzoylamino oder $NHCONHR^5$, bedeuten, wobei

$R^6$ und $X^8$ nicht gleichzeitig für Wasserstoff stehen, und

$R^5$, $Y^7$ und $Y^8$ die bei Formel (III) angegebenen Bedeutung haben.

Ein weiterer Gegenstand der Erfindung is ein Verfahren zur Herstellung eines 4,4-Diaryl-dihydrochinazolons der Formel (I), dadurch gekennzeichnet, daß man eine Harnstoffverbindung der Formel

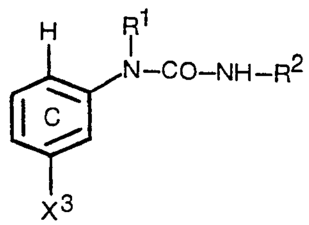

(V)

mit einem Keton der Formel

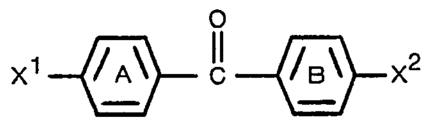

(VI)

umsetzt, worin

$X^1$, $X^2$ $X^3$, $R^1$, $R^2$, A, B und C die oben angegebene Bedeutung besitzen.

Insbesondere handelt es sich bei den Verbindungen (V) um solche, bei denen

$X^3$ ein Elektronendonorsubstituent ist, wie $NY^1Y^2$, $OY^3$ oder $SY^3$, worin

$Y^1$ bis $Y^3$ die oben angegebene Bedeutung besitzen und der Ring C nicht durch starke Elektronenakzeptorsubstituenten, wie z.B. Nitro, Cyano oder Alkoxycarbonyl desaktiviert ist.

Die Umsetzung erfolgt üblicherweise mit wasserabspaltenden Reagenzien ohne oder auch mit unter diesen Bedingungen inerten Lösungsmitteln bei Temperaturen zwischen 0°C und dem Siedepunkt des jeweiligen Mediums. Anschließend wird evtl. nach Entfernen der inerten Lösungsmittel auf beispielsweise Wasser oder einen Alkohol ausgetragen. Durch Anbheben des pH-Wertes mit beispielsweise Alkali- oder Erdalkalihydroxiden, Carbonaten, Hydrogencarbonaten, Ammoniak oder Aminen bis zum Verschwinden der Farbe dieser Mischung erhält man die 4,4-Diaryl-dihydrochinazolone der Formel I. Hierbei kann es notwendig sein, zur Wasserabspaltung aus evtl. gebildeten Carbinolbasen einige Zeit zu erwärmen oder das primär erhaltene unsaubere Produkt in Lösungsmitteln, wie Alkoholen — beispielsweise Methanol, Ethanol, 2-Propanol, Butanol, Nitrilen — beispielsweise Acetonitril, Ketonen — beispielsweise Aceton, 2-Butanon oder Estern — beispielsweise Essigsäureethylester, Essigsäurebutylester, einige Zeit bei Temperaturen zwischen Raumtemperatur und der Siedetemperatur des jeweiligen Mediums zu behandeln.

Wasserabspaltende Reagenzien sind beispielsweise Phosphoroxychlorid, Phosphorpentachlorid, Diphosphorpentoxid, Phosgen, Phosphortrichlorid, Phosphortribromid, Sulfurylchlorid, Thionylchlorid, Oxalylchorid oder Mischungen hiervon. Vorzugsweise werden Phosphoroxycholorid und Phosphoroxychlorid/Diphosphorpentoxid eingesetzt.

Geeignete inerte Lösungsmittel sind beispielsweise Toluol, Chlorbenzol, Dichlorbenzol, Nitrobenzol, chlorierte aliphatische Kohlenwasserstoffe, wie 1,2-Dichlor-ethan.

Die Herstellung der 4,4-Diaryl-dihydrochinazolone der Formel (I) kann auch durch Oxidation von Leukoverbindungen der Formel

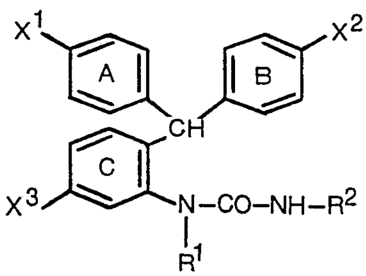

(VII)

worin

$X^1$, $X^2$, $X^3$, $R^1$, $R^2$, A, B und C die oben angegebene Bedeutung besitzen, erfolgen.

Diese Oxidation kan auf bekannte Weise mit höherwertigen Metallverbindungen, wie $PbO_2$, $MnO_2$, Permanganaten, $CrO_3$, Chromaten, Dichromaten, $NiO_2$, $K_3$ $[Fe(CN)_6]$, mit Chinonen, wie Chloranil, Tetrachlor-o-chinon, Dichlordicyano-chinon, oder auf eine andere literaturbekannte Weise, wie z. B. mit Sauerstoff, Luft, Perboraten oder Wasserstoffperoxid, erfolgen.

Die Aufarbeitung, Isolierung und evtl. Nachbehandlung erfolgt auf analoge Weise wie oben beschrieben.

Die Oxidation mit höherwertigen Metallverbindungen erfolgt üblicherweise in saurem Medium oder in organischen Lösungsmitteln, wie Alkoholen- z.B. Ethanol, Isopropanol, Ethylenglykolmonomethylether, Ketonen — z.B. Aceton, Butanon oder Methylisopropylketon oder polaren aprotischen Lösungsmitteln, z.B. N-Methyl-pyrrolidon, γ-Butyrolacton, Acetonitril, Dimethylsulfoxid oder Sulfolan oder in Mischungen solcher Lösungsmittel mit Säuren bei Temperaturen zwischen 0°C und 60°C, vorzugsweise 10—40°C.

Geeignete Säuren sind beispielsweise Salzsäure, Schwefelsäure, Phosphorsäure, Essigsäure, Propionsäure oder Mischungen untereinander und/oder Mischungen mit Wasser. Eine bevorzugte Mischung ist Salzsäure, Essigsäure und Wasser.

Die Oxidation mit Chinonen erfolgt üblicherweise in organischen Lösungsmitteln, wie Alkoholen — z.B. Methanol, Ethanol, Isopropanol; Ketonen — z.B. Aceton, Butanon; Estern- z.B. Essigsäureethyl- oder -butylester; Carbonsäuren — z.B. Essigsäure, Propionsäure; oder polaren aprotischen Lösungsmitteln, wie N-Methylpyrrolidon, Dimethylformamid, γ-Butyrolacton, Acetonitril, Sulfolan oder aber in Mischungen hiervon bei Temperaturen zwischen 0°C und dem Siedepunkt des Mediums, vorzugsweise 20—70°C.

Die 4,4-Diaryl-dihydrochinazolone der Formel (I) sind normalerweise farblos oder höchstens schwach gefärbt.

Wenn diese Farbbildner mt einem vorzugsweise sauren Entwickler, d.h. einem Elektronenakzeptor, in Kontakt gebracht werden, so ergeben sich intensive blaue, grünblaue oder grüne Farbtöne, die ausgezeichnet sublimations- und lichtecht sind.

Sie sind auch wertvoll in Gemisch mit einem oder mehreren anderen bekannten Farbbildnern, z.B. 3,3-Bis-(aminophenyl)-phthaliden, 3,3-Bis-(indolyl)-phthaliden, 3-Amino-fluoranen, 2,6-Diamino-fluoranen, Leukoauraminen, Spiropyranen, Spiropyranen, Chromenoindolen, Phenoxazinen, Phenothiazinen, Carbazolylmethanen oder weiteren Triarylmethankeukofarbstoffen, um blaue, marineblaue, graue oder schwarze Färbungen zu ergeben.

Die 4,4-Diaryl-dihydrochinazolone der Formel (I) zeigen sowohl auf phenolischen Unterlagen wie auch besonders auf aktivierten Tonen eine gute Farbintensität und Lichtechtheit. Sie eignen sich vor allem als Farbbildner für die Verwendung in einem wärmeempfindlichen oder druckempfindlichen Aufzeichnungsmaterial, das sowohl Kopierals auch Registriermaterial sein kann. Ihre Entwicklungsgeschwindigkeit ist in Anhängigkeit von den Substituenten unterschiedlich. Einbe geringe Entwicklungsgeschwindigkeit führt zu einer reduzierten Empfindlichkeit der Aufzeichnungsmaterialien gegenbüber unbeabsichtigter vorzietiger Entwicklung.

Ein Teil der 4,4-Diaryl-dihydrochinazolone der Formel I, vornehmlich solche, bei denen $R^2$ einen gegebenenfalls substituierten Alkylrest bedeutet, sind ausgesprochen langsam entwickelnde Farbbildner. Wegen ihrer guten Lichtechtheit eignen sie sich auch als Mischkomponenten für schnell entwickelnde, aber wenig lichtechte Farbbildner, z.B. Kristallviolettlacton. So wird die Lichtechtheit der Aufzeichnung verbessert.

Ein druckempfindliches Material besteht beispielsweise aus mindestens 1 Paar von Blättern, die mindestens einen Farbbildner der Formel I, gelöst oder dispergiert in einem nichtflüchtigen organischen Lösungsmittel, und einen Elektronenakzeptor als Entwickler enthalten.

Typische Beispiele für solche Entwickler sind anorganische Stoffe wie Tone, Metallsalze oder -oxide oder organische Polymerisate wie Phenolharze.

Die Entwickler können zusätzlich auch im Gemisch mit anderen an sich unreaktiven oder wenig reaktiven Pigmenten eingesetzt werden.

Der Farbbildner liefert an den Punkten, an denen er mit dem Elektronenakzeptor in Kontakt kommt, eine gefärbte Markierung. Um eine frühzeitige Aktivierung der in dem druckempfindlichen

Aufzeichnungsmaterial vorhandenen Farbbildner zu verhindern, werden diese in der Regel von dem Elektronenakzeptor getrennt. Dies kann zweckmäßig erzielt werden, indem man die Farbbildner in schaum-, schwamm- oder bienenwabenartigen Strukturen einarbeitet. Vorzugsweise sind die Farbbildner in Mikrokapseln eingeschlossen, die sich in der Regel durch Druck zerbrechen lassen. Verfahren zur Herstellung derartiger Mikrokapseln sind bekannt.

Als nichtflüchtige Lösungsmittel sind z.B. partiell hydriertes Terphenyl, alkylierte Naphthaline oder Dibutylphthalat geeignet.

Bevorzugt wird eine Anordnung, bei der der eingekapselte Farbbildner in Form einer Schicht auf der Rückseite eines Übertragungsblattes und der Elektronenakzeptor in Form einer Schicht auf der Vorderseite eines Empfangsblattes vorhanden sind.

Eine andere Anordnung der Bestandteile besteht darin, daß die den Farbbildner enthaltenden Mikrokapseln und der Entwickler in oder auf dem gleichen Blatt in Form einer oder mehrerer Einzelshichten oder in der Papierpulpe vorliegen.

Die Verbindungen der Formel I können vorzugsweise auch als Farbbildner in einem thermoreaktiven Aufzeichnungsmaterial verwendet werden. Dieses enthält in der Regel mindestens einen Schichtträger, einen Farbbildner, einen Elektronenakzeptor und gegebenenfalls auch ein Bindemittel.

Thermoreaktive Aufzeichnungssysteme umfassen z.B. wärmeempfindliche Aufzeichungs- und Kopiermaterialien und -papier. Diese Systeme werden beispielsweise zum Aufzeichnen von Informationen, z.B. in elektronischen Rechnern, Ferndruckern, Fernschreibern oder in Aufzeichnungsgeräten und Meßinstrumenten, wie z.B. Elektrokardiographen, verwendet. Die Bilderzeugung (Markierung) kan auch manuell mit einer erhitzten Feder erfolgen. Eine weiter Einrichtung der Erzeugung von Markierung mittels Wärme sind Laserstrahlen.

Das thermoreaktive Aufzeichnungsmaterial kann so aufgebaut sein, daß der Farbbildner in einer Bindemittelschicht gelöst oder dispergiert ist und in einer zweiten Schicht der Entwickler in dem Bindemittel gelöst oder dispergiert ist. Eine andere Möglichkeit besteht darin, daß sowohl der Farbbildner als auch der Entwickler in einer Schicht dispergiert sind. Das Bindemittel wird in spezifischen Bereichen mittels Wärme erweicht und an diesen Stellen, an denen Wärme angewendet wird, kommt der Farbbildner mit dem Elektronenakzeptor in Kontakt, und es entwickelt sich sofort die erwünschte Farbe.

Als Entwickler eignen sich die gleichen Elektronenakzeptoren wie sie in druckempfindlichen Papieren verwendet werden, vorzugsweise phenolische Verbindungen, wie sie beispielsweise in der DE—PS 1 251 348 beschrieben sind, sowie Borsäure und organische, vorzugsweise aliphatische Dicarbonsäuren.

Vorzugsweise werden zur Herstellung des thermoreaktiven Aufzeichnungsmaterials schmelzbare, filmbildende Bindemittel verwendet. Diese Bindemittel sind normalerweise wasserlöslich, während die 4,4-Diaryl-dihydrochinazolone und der Entwickler in Wasser schwerlöslich oder unlöslich sind. Das Bindemittel sollte in der Lage sein, den Farbbildner und den Entwickler bei Raumtemperatur zu dispergieren und zu fixieren.

Bei Einwirkung von Wärme erweicht oder schmilzt das Bindemittel, so daß der Farbbildner mit dem Entwickler in Kontakt kommt und sich eine Farbe bilden kann. Wasserlösliche oder mindestens in Wasser quellbare Bindemittel sind z.B. hydrophile Polymerisate, wie Polyvinylalkohol, Polyacrylsäure, Hydroxyethylcellulose, Methylcellulose, Carboxymethylcellulose, Polyacrylamid, Polyvinylpyrrolidon, Gelatine und Stärke.

Die thermoreaktiven Schichten können weitere Zusätze enthalten: zur Verbesserung des Weißgrades, zur Erleichterung des Bedruckens der Papier, zur Verhinderung des Festklebens der erhitzten Feder und zur Farbbildung nur innerhalb eines begrenzten Temperaturbereiches.

Die beschriebenen Verfahren und Zubereitungen sind beispielsweise aus den US-Patentschriften 2 948 753, 3 096 189 und 3 193 404 und aus den deutschen Offenlegungsschriften 2 555 080 und 2 700 937 bekannt.

## Beispiel 1

27,0 g Michlers Hydrol und 23,5 g N-(3-Dimethylaminophenyl)-N'-(2-butyl)-harnstoff werden in 200 ml 50 %iger Essigsäure und 3 g konz. Salzsäure unter Stickstoff 1 h auf 40—50°C erwärmet. Dan wird in 2 l Wasser gegeben und ein pH von 5 eingestellt. Der Niederschlag wird abgesaugt, mit Wasser gewaschen und getrocknet: 48,7 g (100% der Theorie) einer Verbindung der Formel

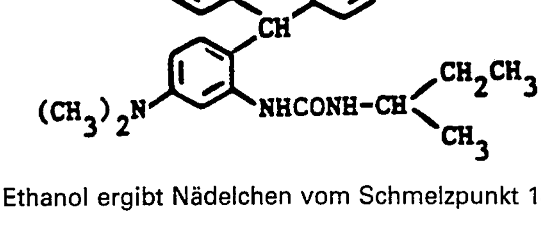

Umkristallisation aus Ethanol ergibt Nädelchen vom Schmelzpunkt 186—187°C.

9,74 g dieser Leukoverbindung werden in 40 ml 50%eiger Essigsäure und 6 g konz. Salzsäure bei 10°C mit 24 ml einer 20%igen wäßrien Bleidioxidsuspension versetzt. Die Temperatur steigt auf 30°C. Nach 5—10 min. werden 14 ml 20%ige Schwefelsäure zugesetzt, das Bleisulfat wird abfiltriert und das tiefblaue Filtrat nach Verdünnen mit 100 ml Methanol in eine Lösung von 80 g Natiumhydroxid in 600 ml Eiswasser eingegossen. Der blaßblaue Niederschlag wird abgesaugt, mit Wasser gewaschen und getrocknet. Beim Kochen in 40 ml Ethanol wandelt er sich in farbloses Kristallisat um, das nach dem Abkühlen abgesaugt, mit Ethanol gewaschen und getrocknet wird.

4,9 g (51% der Theorie) einer Verbindung von Schmelzpunkt 311—312°C (Zers.) und der Formel

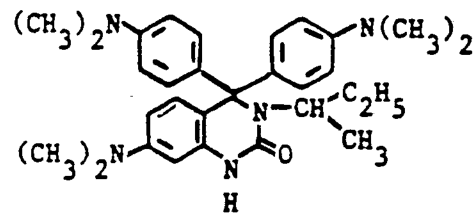

Eine Lösung in Eisessig wird blau mit $\lambda_{max}$ = 600 nm. Mit Bisphenol A wird im Thermodruck eine blaue Farbe entwickelt.

$^1$H-NMR ($CDCl_3$): δ = 0,58 (t; 3H, $CH_3CH_2$), 1,28 (d; $CH_3CH$), 1,42 (mc; 2H, $CH_3CH_2CH$), 2,08 (mc; 1H, $CH$—$CH_2$), 2,87 (2; 6H, $N(CH_3)_2$), 2,94 (2s; 12H, 2 × $N(CH_3)_2$),

ABC-Signal ($\delta_A$ = 6,53, $\delta_B$ = 6,14, $\delta_C$ = 5,98; 3H, 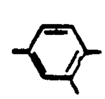),
AA'BB'-Signal ( $\delta_A$ = 7,24, $\delta_B$ = 6,66; 4H, 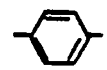),
AA'BB'-Signal ( $\delta_A$ = 7,29, $\delta_B$ = 6,66; 4H, 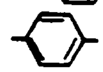 ),
7,83 (s; 1H, NH).

Der als Ausgangsmaterial benutzte N-(3-Dimethylaminophenyl)-N'-(2-butyl)-harnstoff wird folgendermaßen hergestellt:

40,9 g 3-Dimethylamino-anilin und 29,7 g 2-Butylisocyanat werden in 150 ml Toluol zusammengegeben. Die Mischung erwärmt sich bis auf 60°C. Nach dem Erkalten wird der Niederschlag abgesaugt, mit Toluol gewaschen und getrocknet. Man erhält 59,3 g (84% der Theorie) eines farblosen Kristallisats vom Schmp. 145—146°C und der Formel

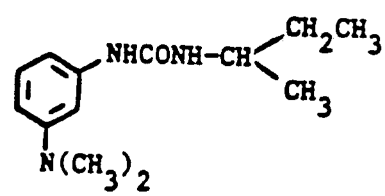

Analog Biespiel 1 werden die folgenden 4,4-Diaryldihydrochinazolone hergestellt:

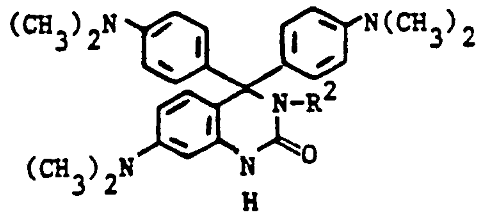

| Beispiel | $R^2$ | 4,4-Diaryldihydrochinazolon | | |
|---|---|---|---|---|
| | | Schmp. °C | $\lambda_{max}$ nm | Farbe auf Ton oder mit Bisphenol A |
| 2 | $-CH(CH_3)_2$ | 315-316 (Zers.) | 600 | blau |
| 3 | 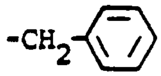 | 274-277 | 605 | blau |
| 4 | $-C_{12}H_{25}$ | 180-183 | 604 | blau |
| 5 | 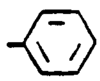 | 283-284 | 604 | blau |
| 6 | 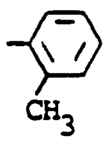 | 275-276 (Zers.) | 600 | blau |
| 7 | 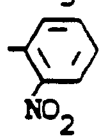 | 274-275 (Zers.) | 606 | blau |
| 8 | $-CH_2CH(CH_3)_2$ | 275-278 (Zers.) | 594 | blau |
| 9 | 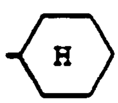 | 308-311 (Zers.) | 604 | blau |
| 10 | 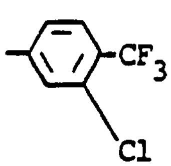 | 251-253 (Zers.) | 605 | blau |
| 11 | 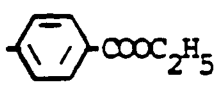 | 266-268 (Zers.) | 606 | blau |
| 12 | 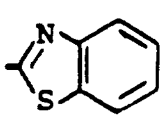 | 249-252 (Zers.) | 605 | blau |

Beispiel 13

27,0 g Michlers Hydrol und 30,0 g N-(3-Dimethylaminophenyl)-N'-(4-nitrophenyl)-harnstoff werden in 200 ml Ethanol und 3 ml Eisessig unter Stickstoff 2 h refluxiert. Nach dem Abkühlen kristallisieren 35,9 g (65% der Theorie) gelbes Kristallpulver vom Schmelzpunkt 198—201°C (Zers.) und der Formel

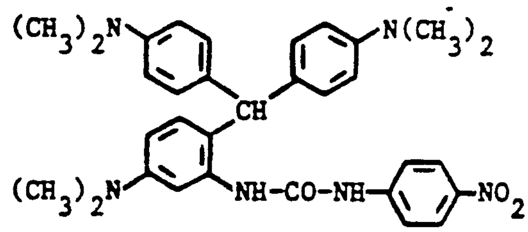

aus.

11,05 g dieser Leukoverbindung werden in 50 ml Dimethylformamid mit 4,9 g Chloranil bei 50°C 1/2 h gerührt. Es wird auf 500 ml Wasser ausgetragen, mit Natronlauge auf pH = 10 gestellt, abgesaugt und mit Wasser gewaschen. Noch feucht wird in 400 ml Wasser suspendiert, mit Natronlauge auf pH = 12 gestellt, auf 80°C geheizt, abgesaugt und mit Wasser gewaschen. Der Filterkuchen wird getrocknet und schließlich aus Toluol umkristallisiert. Man erhält 7,8 g (70% der Theorie) gelbliche Kriställchen vom Schmelzpunkt 234—235°C und der Formel

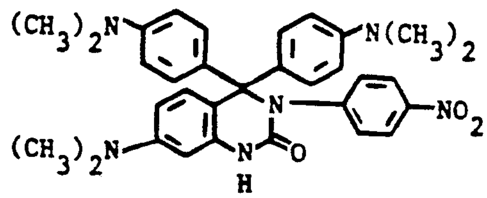

Eine Lösung in Eisessig wird blau mit $\lambda_{max}$ = 604 nm. Auf Säureton wird ebenfalls eine blaue Farbe entwickelt.

$^1$H-NMR ($CDCl_3$): $\delta$ = 2,88 (s; 18N, 3 × $N(CH_3)_2$),

ABC-Signal ($\delta_A$ = 6,68, $\delta_b$ = 6,27, $\delta_C$ = 6,80; 3H),
AA'BB'-Signal ($\delta_A$ = 7,10, $\delta_B$ = 6,53; 8H, 2 x 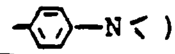),
AA'BB'-Signal ($\delta_A$ = 7,83, $\delta_B$ = 7,13; 4H, 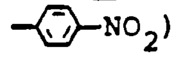),
7,73 (s; 1H, NH).

Das als Ausgangsmaterial benutzte Harnstoffderivat wird wie in Beispiel 1 beschrieben aus 40,9 g 3-Dimethylamino-anilin und 49,2 g 4-Nitrophenylisocyanat hergestellt. Man erhält 63,8 g (71% der Theorie) gelbes Kristallisat vom Schmelzpunkt 202—205°C (Zers.).

Analog Beispiel 13 werden die folgenden 4,4-Diaryldihydrochinazolone hergestellt:

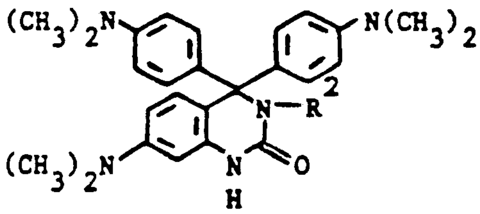

| Beispiel | $R^2$ | $\lambda_{max}$ (nm) | Farbe auf Ton oder mit Bisphenol A |
|---|---|---|---|
| 14 | 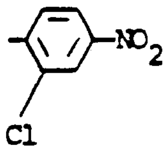 | 606 | blau |
| 15 | 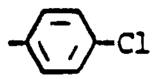 | 602 | blau |
| 16 | 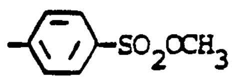 | 605 | blau |
| 17 | 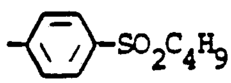 | 606 | blau |
| 18 | 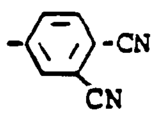 | 606 | blau |
| 19 | 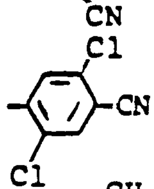 | 606 | blau |
| 20 | 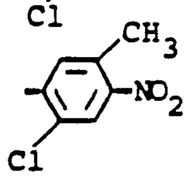 | 604 | blau |
| 21 | 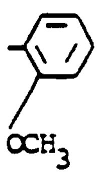 | 600 | blau |
| 22 | 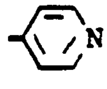 | 606 | blau |
| 23 | 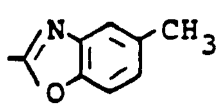 | 606 | blau |
| 24 | 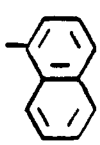 | 598 | blau |

Beispiel 25

10,3 g 4-Dimethylaminophenyl-4-methoxyphenyl-methanol und 8,84 g N-(3-Dimethylaminophenyl)-N'-(2-propyl)-harnstoff werden in 80 ml 50%iger Essigsäure und 1,2 g konz. Salzsäure unter Stickstoff 1 h bei 40—50°C gerührt. Dann wird in 50 ml Wasser gegeben und ein pH von 5 eingestellt. Der Niederschlag wird abgesaugt, mit Wasser gewaschen und getrocknet: 16,4 g (89% der Theorie) einer Verbindung der Formel

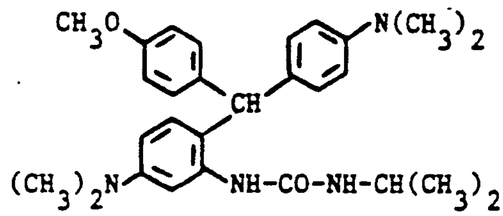

mit dem Schmelzpunkt 92—94°C.

$^1$H-NMR ($CDCl_3$): δ = 1,04 (d; 6H, $CH(CH_3)_2$), 2,91 (2s; 12H, $N(CH_3)_2$), 3,78 (s; 3H, $OCH_3$), 3,85 (mc; 1H, $CH(CH_3)_2$), 4,33 (d; 1H, *NH*CH), 5,43 (s; 1H, Leuko-H), 5,69 (s; 1H, Ar-NH),

ABC-Signal ($\delta_A$ = 6,81, $\delta_B$ = 6,77, $\delta_C$ = 6,5; 3H, 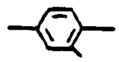), AA'BB'-Signal ($\delta_A$ = 6,92, $\delta_B$ = 6,65; 4H, 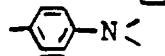 ), AA'BB'-Signal ($\delta_A$ = 6,98, $\delta_B$ = 6,80; 4H, 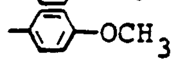).

9,2 g dieser Leukoverbindung werden in 40 ml 80%iger Essigsäure und 6 g konz. Salzsäure bei 5°C mit 15,5 ml einer 31%igen wäßrigen Bleidioxidsuspension versetzt.

Die Temperatur steigt auf 30°C. Nach 5—10 min werden 14 ml 20%ige Schwefelsäure zugesetzt, das Bleisulfat wird abfiltriert und das tiefgrüne Filtrat nach Verdünnen mit 100 ml Methanol in eine Lösung von 80 g Natriumhydroxid in 650 ml Eiswasser eingegossen. Der blaßgrüne Niederschlag wird abgesaugt, mit Wasser gewaschen und getrocknet. Beim Kochen mit 25 ml 2-Propanol wandelt er sich in farbloses Kristallisat um, das nach dem Abkühlen abgesaugt, mit 2-Propanol gewaschen und getrocknet wird: 4,1 g (59% der Theorie) einer Verbindung vom Schmelzpunkt 297—300°C (Zers.) und der Formel

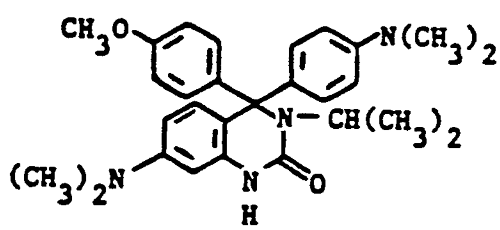

Eine Lösung in Eisessig wird grün mit $\lambda_{max}$ = 474, 621 nm. Mit Bisphenol A im Thermodruck wird ebenfalls eine grüne Farbe entwickelt.

$^1$H-NMR ($CDCl_3$): δ = 1,25 (t; 2d, 6H, $CH(CH_3)_2$), 2,85, 2,95 (je s; je 6H, je $N(CH_3)_2$), 3,35 (Septett; 1H, $CH(CH_3)_2$), 3,79 (s; 3H, $CH_3O$),

ABC-Signal ($\delta_A$ = 6,45, $\delta_B$ = 6,13, $\delta_C$ = 6,03; 3H, 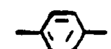), AA'BB'-Signal ($\delta_A$ = 7,25, $\delta_B$ = 6,66; 4H, 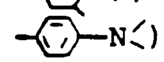), AA'BB-Signal ($\delta_A$ = 7,36, $\delta_B$ = 6,83; 4H, 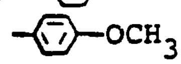), 8,20 (s; 1H, NH).

Analog Beispiel 25 werden die folgenden 4,4-Diaryldihydrochinazolone hergestellt:

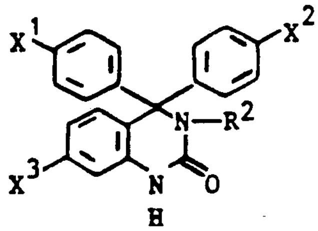

| Beispiel | $X^1$ | $X^2$ | $X^3$ | $R^2$ | Farbton mit Bisphenol A |
|---|---|---|---|---|---|
| 26 | $-OCH_3$ | 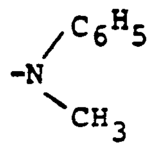 | $-N(CH_3)_2$ | 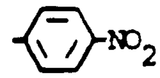 | blaugrün |
| 27 | H | $-N(CH_3)_2$ | " | 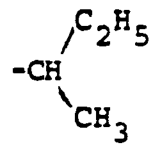 | grün |
| 28 | $-OCH_3$ | $-SCH_3$ | " | 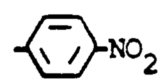 | blaugrün |
| 29 | $-NHC_6H_5$ | $-N(CH_3)_2$ | $-OC_2H_5$ | " | grünst. blau |
| 30 | " | " | " | 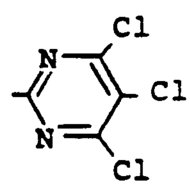 | " " |
| 31 | 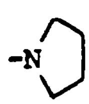 | 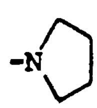 | $-N(CH_3)_2$ | 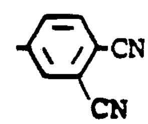 | blau |
| 32 | 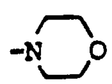 | 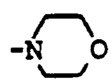 | $-N(CH_3)_2$ | 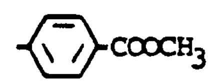 | blau |

Beispiel 33

38,8 g der nach DE-PS 82 268 hergestellten Leukoverbindung der Formel

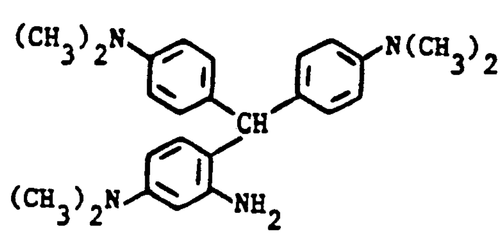

werden mit 13,2 g Phenylisocyanat in 300 ml Toluol 1 h bei 60°C gerührt. Das Lösungsmittel wird abdestilliert und der Rückstand aus Ethanol umkristallisiert. Man erhält 36,5 g (72% der Theorie) farbloses

Kristallpulver vom Schmelzpunkt 183—184°C und der Formel

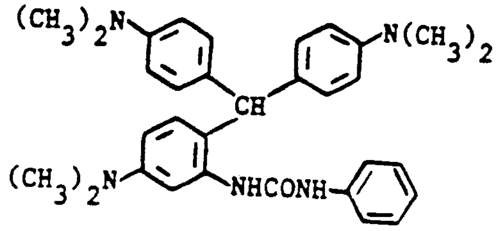

Diese Verbindung kann analog Beispiel 1 oder 13 zu der Verbindung des Beispiels 5 oxidiert werden. Analog lassen sich die Verbindungen der Beispiele 1 bis 4, 6 bis 28 und 31 bis 32 herstellen.

Beispiel 34

35,9 g der nach A. Baeyer, V. Villiger, Ber. Dtschen Chem. Ges. *36,* 2 774 (1903) hergestellten Verbindung der Formel

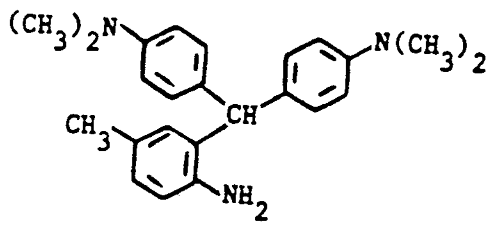

werden in 300 ml Toluol mit 8,5 g 2-Propylisocyanat 1 h bei 60°C gerührt. Nach dem Erkalten wird abgesaugt, mit 100 ml Petrolether 40/80 gewaschen und getrocknet. Man erhält 27 g (61% der Theorie) beiges Pulver vom Schmelzpunkt 119—120°C und der Formel

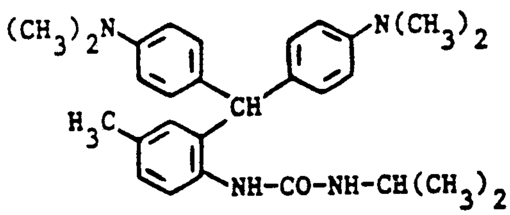

Diese Verbindung kann analog Beispiel 1 oder 13 oxidiert werden. Das Rohprodukt wird in 100 ml Ethanol bis zur Entfärbung gekocht. Man erhält nach dem Erkalten 17,1 g (63% der Theorie bei der Oxidation) farbloses Pulver mit einem Schmelzpunkt > 300°C und der Formel

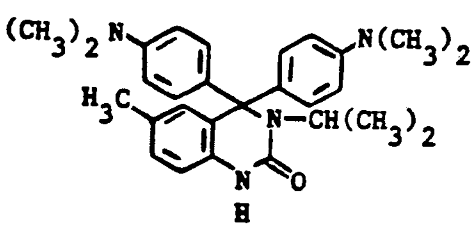

Eine Lösung in Eisessig wird grün mit $\lambda_{max}$ = 625 nm. Mit Bisphenol A wird im Thermodruck ebenfalls eine stumpfe blaugrüne Farbe entwickelt.

Beispiel 35

18,8 g der Verbindung der Formel

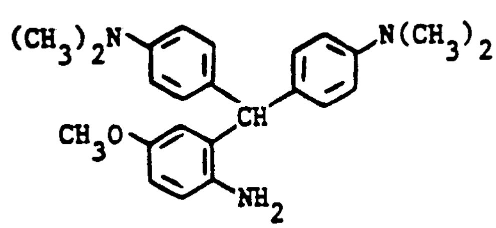

werden in 150 ml Toluol mit 8,2 g 4-Nitrophenylisocyanat 2 h bei 60°C gerührt. Nach dem Abkühlen wird

abgesaugt, mit Toluol und Methanol gewaschen und getrocknet. Man erhält 23,2 g (86% der Theorie) gelbliche Kriställchen vom Schmelzpunkt 167—169°C (Zers.) und der Formel

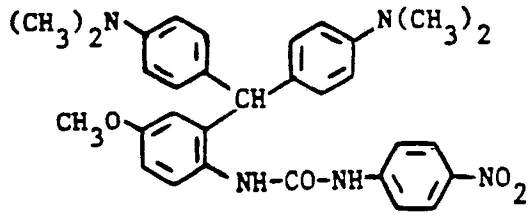

Diese Verbindung kann analog Beispiel 1 oder 13 oxidiert werden. Durch Kochen in 60 ml Ethanol erhält man 18,3 g (79% d. Th.) orangegelbes Kristallpulver der Formel

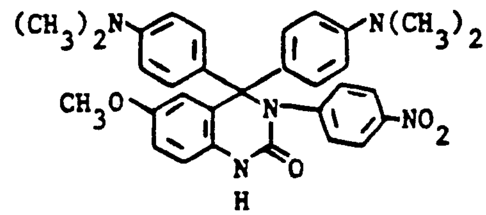

Schmelzpunkt 267—269°C (Zers.) aus Dimethylformamid.

$^1$H-NMR ([$D_6$]-DMSO): $\delta$ = 2,83 (s; 12H, 2N($CH_3$)$_2$), 3,57 (s; 3H, $OCH_3$), ABC-Signal ($\delta_A$ = 6,80, $\delta_B$ = 6,76, $\delta_C$ = 6,18; 3H, -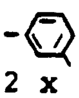-), AA'BB'-Signal ($\delta_A$ = 7,01, $\delta_B$ = 6,58; 8H, 2 x -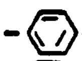-N< ), AA'BB'-Signal ($\delta_A$ = 7,86, $\delta_B$ = 7,12; 4H, -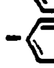-$NO_2$), 9,83 (s; 1H, NH).

Eine Lösung in Eisessig wird grün mit $\lambda_{max}$ = 632 nm. Mit Bisphenol A im Thermodruck wird ebenfalls eine blaugrüne Farbe entwickelt.

Analog lassen sich die folgenden 4,4-Diaryldihydrochinazolone herstellen:

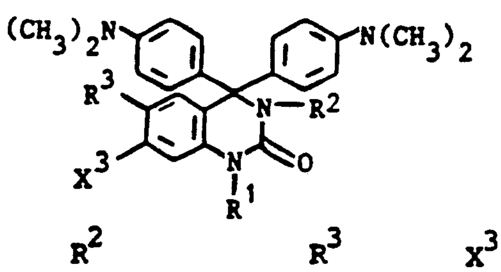

| Beispiel | $R^1$ | $R^2$ | $R^3$ | $X^3$ | Farbe mit Bisphenol A |
|---|---|---|---|---|---|
| 36 | H | 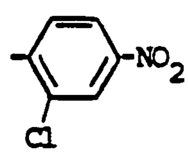 | $C_2H_5O$ | H | grün |
| 37 | 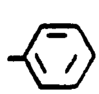 | 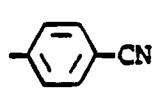 | " | " | " |
| 38 | H | 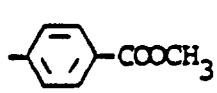 | $CH_3O$ | Cl | " |
| 39 | " | 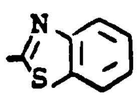 | 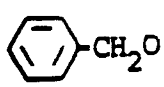 | " | " |

Beispiel 40

270 g Michlers Hydrol und 137 g 3-Methoxy-4-Methyl-anilin werden in 1 l Methanol und 5 ml konz. Salzsäure 2 h refluxiert. Nach dem Erkalten wird abgesaugt und aus Toluol umkristallisiert. Man erhält 230 g (59% d. Th.) beiges Kristallisat vom Schmp. 190—192°C und der Formel

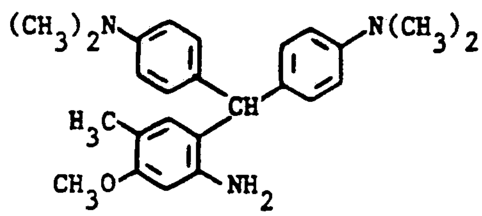

38,9 g werden in 300 ml Toluol mit 16,4 g 4-Nitrophenylisocyanat 2 h bei 60—65°C verrührt. Nach dem Abkühlen wird abgesaugt, mit Toluol gewaschen und getrocknet. Man erhält 36 g (65% der Theorie) gelbe Kristalle vom Schmp. 178—180°C (Zers.) und der Formel

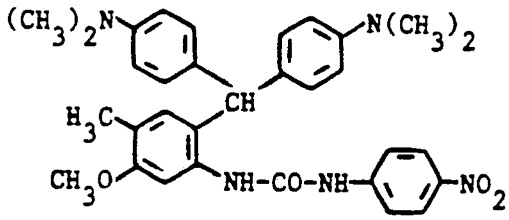

16,6 g hiervon werden analog Beispiel 1 oder 13 oxidiert. Man erhält so 14,3 g (86% d. Th.) eines gelben Kristallisats vom Schmp. 265—267°C (Zers.) und der Formel

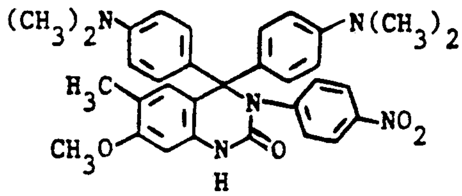

Eine Lösung in Eisessig wird blaugrün mit $\lambda_{max} = 486,620$ nm. Auf Säureton wird ebenfalls eine blaugrüne Farbe entwickelt.

Analog lassen sich die folgenden 4,4-Diaryldihydrochinazolone herstellen:

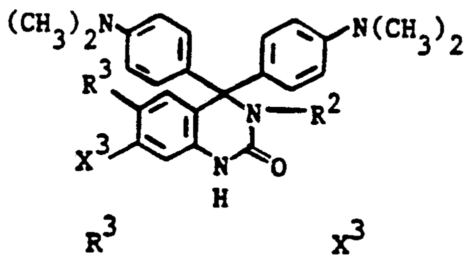

| Beispiel | $R^2$ | $R^3$ | $X^3$ | Farbton auf Ton oder mit Bisphenol A |
|---|---|---|---|---|
| 41 | 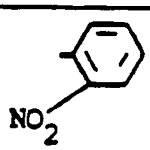 | $-C_2H_5$ | $CH_3O-$ | grün |
| 42 | 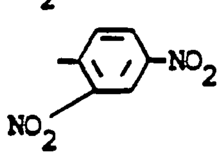 | $-CH_3$ | $C_2H_5O-$ | grün |
| 43 | 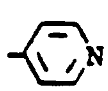 | 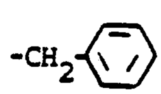 | $CH_3O-$ | grün |
| 44 | 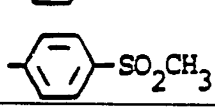 | $-CH_3$ | $CH_3O-$ | grün |

Beispiel 45

36,4 g der analog zu DE—PS 82 634 hergestellten Verbindung der Formel

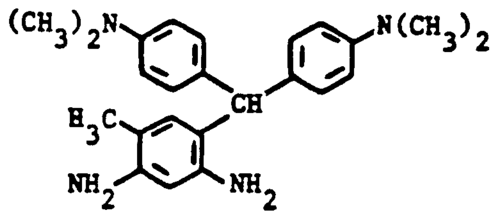

werden in 250 ml Toluol mit 41 g 4-Nitrophenylisocyanat 2 h bei 70°C gerührt. Nach dem Abkühlen wird abgesaugt, mit Toluol und Methanol gewaschen und getrocknet. Man erhält 65 g (94% der Theorie) gelbes Pulver vom Schmp. 200—202°C (Zers.) und der Formel

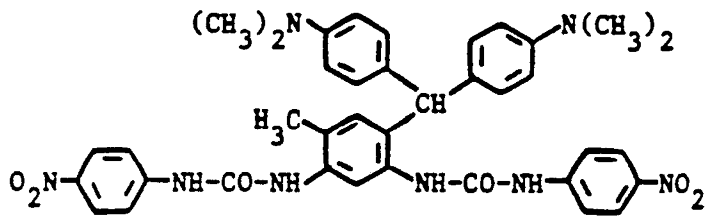

20,8 g dieser Verbindung werden analog Beispiel 1 oder 13 oxidiert. Das Rohprodukt wird in 100 ml Ethanol bis zur Entfärbung gekocht. Nach dem Abkühlen erhält man 18,7 g (90% d. Th.) gelbliches Kristallpulver vom Schmp. 265—267°C (Zers.) und der Formel

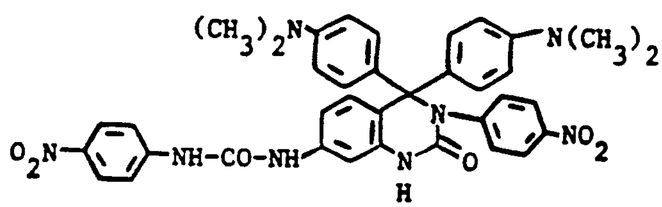

Eine Lösung in Eisessig wird grün mit $\lambda_{max}$ = 470,622 nm. Mit Bisphenol A wird ebenfalls eine stumpfe grüne Farbe entwickelt.

Analog werden die folgenden 4,4-Diaryldihydrochinazolone hergestellt:

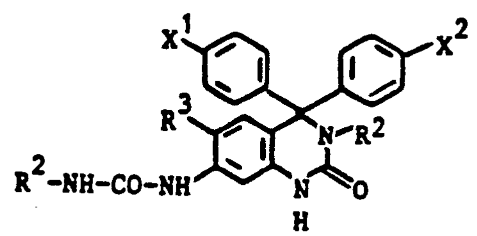

| Beispiel | $X^1 = X^2$ | $R^2$ | $R^3$ | Farbe auf Ton oder mit Bisphenol A |
|---|---|---|---|---|
| 46 | $-N(C_2H_5)_2$ | 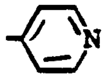 | $C_2H_5$ | grün |
| 47 | 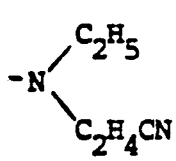 | 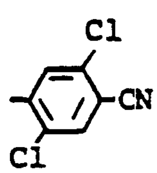 | $CH_3$ | " |

Beispiel 48

8,04 g Michlers Keton und 7,06 g des Harnstoffs der Formel

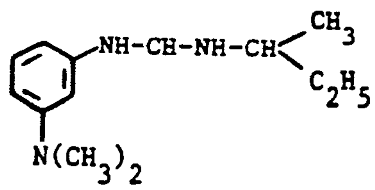

werden in 60 ml Phosphoroxychlorid 2 h bei 30°C gerührt. Dann wird auf 1 l Wasser ausgetragen, mit Natronlauge auf pH = 10 gestellt. Der Niederschlag wird abgesaugt und mehrmals in 10 ml Ethanol 1 h gekocht. Schließlich erhält man 3,3 g (23% d. Th.) hellgraues Pulver vom Schmelzpunkt 311—312°C (Zers.), das identisch ist mit dem in Beispiel 1 erhaltenen.

Beispiel 49

Herstellung eines druckempfindlichen Kopierpapiers

Eine Lösung von 3 g der 4,4-Diaryldihydrochinazolon-Verbindung des Beispiels 13 in 80 g Diisopropylnaphthalin und 17 g Kerosin wird auf an sich bekannte Weise mit Gelatine und Gummiarabicum durch Koazervation mikroverkapselt, mit Stärkelösung vermischt und auf ein Blatt Papier gestrichen. Ein zweites Blatt Papier wird auf der Frontseite mit säureaktiviertem Bentonit als Farbentwickler beschichtet. Das erste Blatt und das mit Farbentwickler beschichtete Blatt werden mit den Beschichtungen benachbart aufeinandergelegt. Durch Schreiben mit der Hand oder mit der Schreibmaschine auf dem ersten Blatt wird Druck ausgeübt, und es entwickelt sich auf dem mit dem Entwickler beschichteten Blatt eine intensive blaue Kopie, die ausgezeichnet lichtecht ist.

Beispiel 50

1 g der 4,4-Diaryldihydrochinazolon-Verbindung des Beispiels 12 wird in 17 g Toluol gelöst. Zu dieser Lösung gibt man unter Rühren 12 g Polyvinylacetat, 8 g Calciumcarbonat und 2 g Titandioxid. Die erhaltene Suspension wird im Gewichtsverhältnis 1/1 mit Toluol verdünnt und mit einem 10 µm Rakel auf ein Blatt Papier gestrichen. Auf dieses Blatt Papier wird ein zweites Blatt Papier gelegt, dessen Unterseite bei einem Auftragsgewicht von 3 $g/m^2$ mit einer Mischung — bestehend aus 1 Teil eines Amidwachses, 1 Teil eines Stearinwachses und 1 Teil Zinkchlorid — beschichtet ist. Durch Schreiben mit der Hand oder mit der Schreibmaschine auf dem oberen Blatt wird Druck ausgeübt, und es entwickelt sich auf dem mit dem Farbbildner beschichteten Blatt eine intensive und lichtechte blaue Farbe.

Beispiel 51

Herstellung eines wärmeempfindlichen Aufzeichnungsmaterials

In einer Kugelmühle werden 32 g 4,4'-Isopropyliden-diphenol (Bisphenol A), 3,8 g Distearylamid des Ethylendiamins, 89 g Kaolin, 20 g eines zu 88% hydrolysierten Polyvinylalkohols und 55 ml Wasser gemahlen, bis die Teilchengröße ca. 5 µm beträgt. In einer 2. Kugelmühle werden 6 g der 4,4-Diaryldihydrochinazolon-Verbindung des Beispiels 9, 3 g eines zu 88% hydrolysierten Polyvinylalkohols und 60 ml Wasser zu einer Teilchengröße von ca. 3 µm gemahlen. Die beiden Dispersionen werden zusammengegeben und mit einem Trockenauftragsgewicht von 5,5 $g/m^2$ auf ein Papier gestrichen. Durch Berühren des Papiers mit einem erhitzten Kugelschreiber wird eine intensive blaue Farbe erhalten, die eine gute Licht- und Sublimierechtheit hat.

Beispiel 52

In einer Kugelmühle werden 2,7 g der 4,4-Diaryldihydrochinazolon-Verbindung des Beispiels 18, 24 g N-Phenyl-N'-(1-hydroxy-2,2,2-trichlor-ethyl)-harnstoff, 16 g Stearinsäureamid, 59 g eines zu 88% hydrolysierten Polyvinylalkohols und 58 ml Wasser gemahlen, bis die Teilchengröße 2—5 µm beträgt. Diese Suspension wird bei einem Trockenauftragsgewicht von 5,5 $g/m^2$ auf ein Blatt Papier gestrichen. Durch Berührung des Papiers mit einem erhitzten Kugelschreiber wird eine intensive und lichtechte blaue Farbe erhalten.

**Patentansprüche**

1. Chromogene 4,4-Diaryl-dihydrochinazolone der Formel

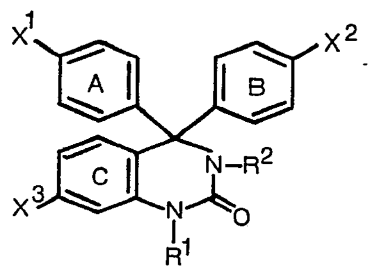

worin

$X^1$, $X^2$ und $X^3$ unabhängig voneinander Wasserstoff, Halogen, Alkyl, Aryl, Alkanoylamino, Aroylamino, $NY^1Y^2$, $OY^3$ oder $SY^3$, wobei wenigstens einer der Reste

$X^1$, $X^2$ oder $X^3$ für $NY^1Y^2$, $OY^2$ oder $SY^3$ steht,

$R^1$ Wasserstoff, Alkyl, Cycloalkyl, Aralkyl, Aryl,

$R^2$ Wasserstoff, Alkyl, Cycloalkyl, Aralkyl, Aryl, Hetaralkyl oder Hetaryl,

$Y^1$, $Y^2$ und $Y^3$ unabhängig voneinander Wasserstoff, Alkyl, Cycloalkyl, Aralkyl oder Aryl oder die restlichen Glieder eines zu einem der o-ständigen Benzol-C-Atome reichenden, gegebenenfalls weitere Heteroatome enthaltenden 5- oder 6-gliedrigen Ringes oder

$Y^1 + Y^2$ die restlichen Glieder eines gegebenenfalls weitere Heteroatome enthaltenden 5- oder 6-gliedrigen Ringes bedeuten und

die Ringe A, B und C sowie die genannten Reste durch Halogen, Hydroxy, Alkoxy, Aryloxy, Aralkoxy, Hetaryloxy, Aryl, Hetaryl, Alkylmercapto, Arylmercapto, Aralkylmercapto, Alkylsulfonyl, Cyan, Carbamoyl, Alkoxycarbonyl, gegebenenfalls durch 1 oder 2 Alkyl-, Aryl- oder Aralkylgruppen substituiertes Amino, Alkenyloxy, Alkylcarbonyloxy oder Arylcarbonyloxy und die Ringe A, B und C außerdem durch Alkyl, Aralkyl, Nitro, Alkenyl oder Arylvinyl substituiert sein können.

2. Chromogene 4,4-Diaryl-dihydrochinazolone gemäß Anspruch 1 der Formel

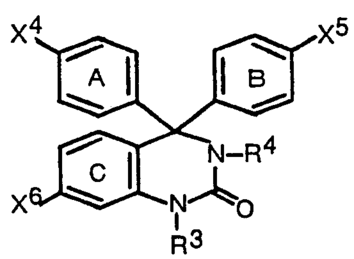

worin

einer der Reste $X^4$, $X^5$ oder $X^6$ für $NY^4Y^5$ steht und die anderen unabhängig voneinander Wasserstoff, Halogen, $C_1$- bis $C_{12}$-Alkyl, gegenbenenfalls durch Chlor und/oder $C_1$- bis $C_{12}$-Alkyl substituiertes Phenyl, $C_1$- bis $C_{12}$-Alkanoylamino, gegebenenfalls durch Chlor und/oder $C_1$- bis $C_{12}$-Alkyl substituiertes Benzoylamino, $NY^4Y^5$, $OY^6$ oder $SY^6$,

$R^3$ Wasserstoff, $C_1$- bis $C_{12}$-Alkyl, Cyclohexyl oder gegenbenenfalls durch Chlor und/oder $C_1$- bis $C_4$-Alkyl substituierte Benzyl- oder Phenylreste,

$R^4$ Wasserstoff, gegebenenfalls Chlor, Cyano, $C_1$- bis $C_4$-Alkoxycarbonyl und/oder $C_1$—$C_4$-Alkoxy tragendes $C_1$- bis $C_{30}$-Alkyl, gegebenenfalls Chlor und/oder $C_1$- bis $C_4$-Alkyl tragendes Cyclohexyl, gegebenenfalls Nitro, Chlor, $C_1$- bis $C_4$-Alkyl und/oder $C_1$- bis $C_4$-Alkoxy tragendes Benzyl, gegebenenfalls Chlor, Brom, Nitro, $C_1$- bis $C_4$-Alkyl, $C_1$- bis $C_4$-Alkoxy, $C_1$- bis $C_4$-Alkylthio, Mono- oder Di-$C_1$- bis $C_4$-Dialkylamino, $C_1$- bis $C_4$-Alkylsulfonyl, Cyano und/oder $C_1$- bis $C_4$-Alkoxycarbonyl tragende Phenyl-, Naphthyl-, Picolyl-, Pyridyl-, Pyrimidyl-, Pyrazinyl-, Triazinyl-, Triazolyl-, Thiadiazolyl-, Tetrazolyl-, gegebenenfalls benzanellierte Imidazol-, Oxazol- oder Thiazolreste,

$Y^4$, $Y^5$ und $Y^6$ unabhängig voneinander Wasserstoff, gegebenenfalls durch Chlor, Cyano, $C_1$- bis $C_4$-Alkoxycarbonyl oder $C_1$- bis $C_4$-Alkoxy substituiertes $C_1$- bis $C_8$-Alkyl, Cyclohexyl oder Phenyl oder Benzyl, die durch Chlor, $C_1$- bis $C_4$-Alkyl oder $C_1$- bis $C_4$-Alkoxy substituiert sein können, oder Glieder, die zur Vervollständigung eines Ringsystemes der folgenden Formeln

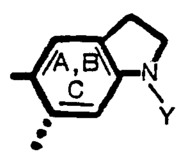 , 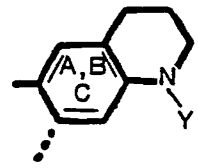 , 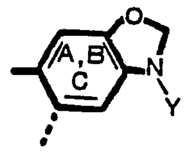 , 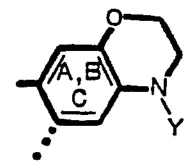

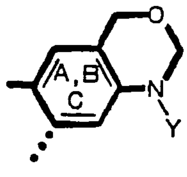 , 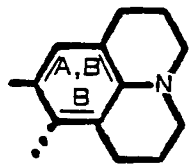 , 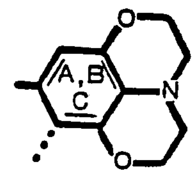 , 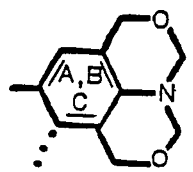

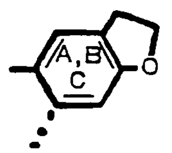 , 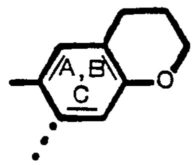 , 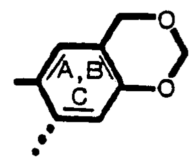 , 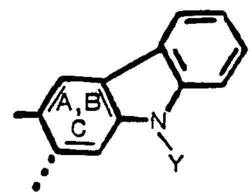

erforderlich sind, bedeuten, worin

die gestrichelte Linie die weitere Anellierung im Fall von Ring C bedeutet,

Y für Wasserstoff, gegebenenfalls durch Chlor, Cyano, $C_1$- bis $C_4$-Alkoxycarbonyl oder $C_1$- bis $C_4$-Alkoxy substituiertes $C_1$- bis $C_8$-Alkyl, Cyclohexyl oder Phenyl oder Benzyl, die durch Chlor, $C_1$- bis $C_4$-Alkyl oder $C_1$- bis $C_4$-Alkoxy substituiert sein können, steht,

der gesättigte Ringteil bis zu 4 Reste aus der Gruppe Chlor, $C_1$- bis $C_4$-Alkyl, $C_1$- bis $C_4$-Alkoxy- und Phenyl tragen kann,

die Ringe A, B, C durch Chlor, $C_1$- bis $C_4$-Alkyl, $C_1$- bis $C_4$-Alkoxy und/oder $C_1$- bis $C_4$-Alkanoylamino substituiert sein können, oder

$NY^4Y^5$ einen gegebenenfalls durch Chlor, $C_1$- bis $C_4$-Alkyl oder Aryl, insbesondere Phenyl, substituierten Pyrrolo-, Pyrrolidino-, Piperidino-, Pipecolino-, Morpholino-, Pyrazolo- oder Pyrazolinorest bedeutet.

3. Chromogene 4,4-Diaryl-dihydrochinazolone der Formel des Anspruches 2, worin zwei der Reste $X^4$, $X^5$ und $X^6$ für $NY^4Y^5$ stehen, und

$X^4$, $X^5$ bzw. $X^6$ für $X^{4'}$, $X^{5'}$ bzw. $X^{6'}$ = Wasserstoff, Chlor, Brom, $C_1$- bis $C_4$-Alkyl, gegebenenfalls durch Chlor und/oder $C_1$- bis $C_4$-Alkyl substituiertes Phenyl, $C_1$- bis $C_4$-Alkanoylamino, gegebenenfalls durch Chlor und/oder $C_1$- bis $C_4$-Alkyl substituiertes Benzoylamino, $OY^{6'}$ oder $SY^{6'}$,

$R^3$ für $R^{3'}$ = Wasserstoff oder $C_1$—$C_4$-Alkyl,

$R^4$ für $R^{4'}$ = Wasserstoff, gegebenenfalls Chlor oder $C_1$- bis $C_4$-Alkoxy tragendes $C_1$- bis $C_{12}$-Alkyl, Cyclohexyl, gegebenenfalls Chlor und/oder $C_1$- bis $C_4$-Alkyl tragendes Benzyl, gegebenenfalls Chlor, Brom, Nitro, $C_1$- bis $C_4$-Alkyl, $C_1$- bis $C_4$-Alkoxy, $C_1$- bis $C_4$-Alkylthio, $C_1$- bis $C_4$-Dialkylamino, $C_1$- bis $C_4$-Alkylsulfonyl, Cyano und/oder $C_1$- bis $C_4$-Alkoxycarbonyl tragende Phenyl-, Naphtyl-, Picolyl-, Pyridyl-, Pyrimidyl-, Pyrazinyl-, Triazinyl-, Triazolyl-, Thiadiazolyl-, Tetrazolyl-, gegebenenfalls benzanellierte Imidazol-, Oxazol- oder Thiazolreste,

$Y^4$, $Y^5$ bzw. $Y^6$ für $Y^{4'}$, $Y^{5'}$ bzw. $Y^{6'}$ = unabhängig voneinander Wasserstoff, durch Chlor, Cyano, Methoxycarbonyl, Methoxy oder Ethoxy substituiertes $C_1$- bis $C_4$-Alkyl, Cyclohexyl, Benzyl oder Phenyl, die durch Chlor, Methyl oder Methoxy substituiert sein können, stehen, oder $Y^{4'}$, $Y^{5'}$ und $Y^{6'}$ für die Glieder stehen, die zu den in Anspruch 2 unter $Y^4$, $Y^5$ und $Y^6$ aufgeführten Ringsystemen führen.

4. Chromogene 4,4-Diaryl-dihydrochinazolone gemäß Anspruch 1 der Formel

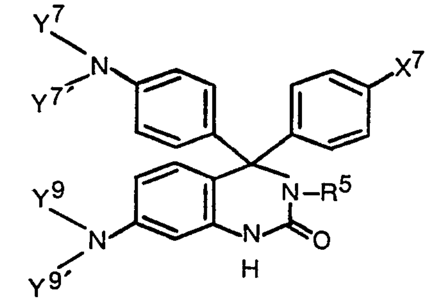

worin

$R^5$ Methyl, Ethyl, 1-Propyl, 2-Propyl, 2-Methyl-1-propyl, 1-Butyl, 2-Butyl, 2,2-Dimethyl-1-propyl, 1-Pentyl, 2-Pentyl, 1-Hexyl, 1-Dodecyl, 1-Tetradecyl, 1-Hexadecyl, 1-Octadecyl, 2-Bornylmethyl, Cyclohexyl, Benzyl, Phenyl, 2-, 3- oder 4-Tolyl, 2-, 3- oder 4-Anisyl, 2-, 3- oder 4-Chlor-phenyl, 2-, 3- oder 4-Nitro-phenyl, 2-, 3- oder 4-Cyano-phenyl, 2-, 3- oder 4-Trifluormethyl-phenyl, 3- oder 4-Methoxycarbonyl-phenyl, 3- oder 4-Methoxysulfonyl-phenyl, 2,4-Dinitro-phenyl, 3-Chlor-4-trifluormethyl-phenyl, 2-Chlor-4-nitrophenyl, 3-Chlor-4-nitro-phenyl, 5-Chlor-2-methyl-4-nitro-phenyl, 4-Chlor-3-methyl-phenyl, 3,4-Dicyano-phenyl, 2,5-Dichlor-4-cyano-phenyl, 4-Pyridyl, Benzthiazolyl, 5-Methyl-benzoxazolyl, 4,5,6-Trichlor-2-pyrimidyl,

$X^7$ $NY^8Y^{8'}$ oder Wasserstoff, Methoxy, Ethoxy, Propoxy, Benzyloxy, Methylthio oder Ethylthio,

$Y^7$ bis $Y^9$ Methyl, Ethyl, Cyanethyl, Methoxyethyl, Methoxycarbonylethyl, Benzyl oder Phenyl,

$Y^{7'}$ bis $Y^{9'}$ Wasserstoff, Methyl, Ethyl, Cyanethyl, Methoxyethyl, Methoxycarbonylethyl, Benzyl oder Phenyl bedeuten.

5. Chromogene 4,4-Diaryl-dihydrochinazolone gemäß Anspruch 1 der Formel

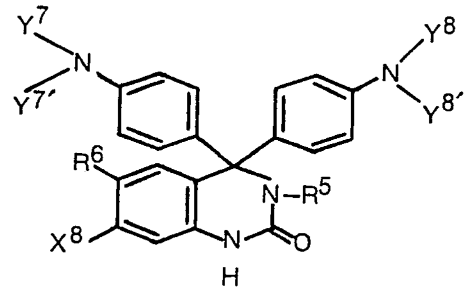

worin

$R^6$ Wasserstoff, Chlor, Methyl oder Methoxy und

$X^8$ Wasserstoff, Chlor, Methyl, Ethyl, Propyl, Butyl, Benzyl, Methoxy, Ethoxy, Propoxy, Benzyloxy, Methylthio, Ethylthio, Acetylamino, Benzoylamino oder $NHCONHR^5$, bedeuten, wobei

$R^6$ und $X^8$ nicht gleichzeitig für Wasserstoff stehen, und

$R^5$, $Y^7$ und $Y^8$ die in Anspruch 4 angegebene Bedeutung haben.

6. Verfahren zur Herstellung eines 4,4-Diaryl-dihydrochinazolons des Anspruchs 1, dadurch gekennzeichnet, daß man eine Harnstoffverbindung der Formel

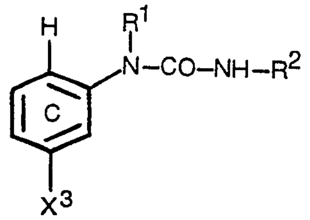

mit einem Keton der Formel

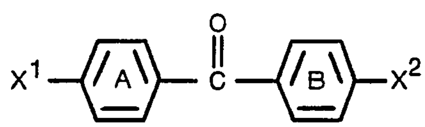

umsetzt, worin

$X^1$, $X^2$, $X^3$, $R^1$, $R^2$, A, B und C die in Anspruch 1 angegebene Bedeutung besitzen.

7. Verfahren zur Herstellung eines 4,4-Diaryl-dihydrochinazolons des Anspruchs 1, dadurch gekennzeichnet, daß man eine Leukoverbindung der Formel

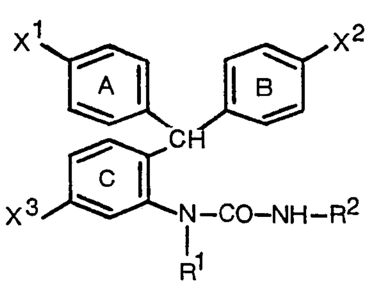

oxidiert, worin

$X^1$, $X^2$, $X^3$, $R^1$, $R^2$, A, B und C die in Anspruch 1 angegebene Bedeutung besitzen.

8. Verwendung eines 4,4-Diaryl-dihydrochinazolons der in Anspruch 1 angegebene Formel als Farbbildner in einem druck- oder wärmeempfindlichen Aufzeichnungsmaterial.

9. Druck- oder wärmeempfindliches Aufzeichnungsmaterial, dadurch gekennzeichnet, daß es in seinem Reaktantensystem mindestens eine 4,4-Diaryl-dihydrochinazolonverbindung der in Anspruch 1 angegebenen Formel als Farbbildner enthält.

## Revendications

1. 4,4-Diaryl-dihydroquinazolones chromogènes de formule

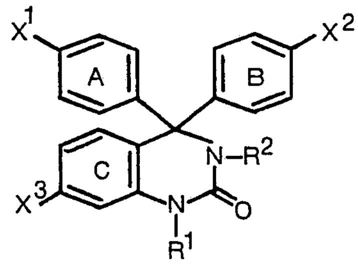

dans laquelle

$X^1$, $X^2$ et $X^3$ représentent chacun indépendamment l'hydrogène, un halogène ou un groupe alkyle, aryle, alcanoylamino, aroylamino, $NY^1Y^2$, $OY^3$ ou $SY^3$, l'un au moins des restes

$X^1$, $X^2$ ou $X^3$ représentant $NY^1Y^2$, $OY^2$ ou $SY^3$,

$R^1$ représente l'hydrogène ou un groupe alkyle, cycloalkyle, arylalkyle ou aryle,

$R^2$ représente l'hydrogène ou un groupe alkyle, cycloalkyle, arylalkyle, aryle, héteroalkyle ou hétéroaryle,

$Y^1$, $Y^2$ et $Y^3$ représentent chacun indépendamment l'hydrogène ou un groupe alkyle, cycloalkyle, arylalkyle ou aryle ou les chaînons restants d'un noyau à 5 ou 6 chaînons, contenant éventuellement d'autres hétéroatomes, complété avec l'un des atomes de carbone en ortho du noyau benzénique ou bien

$Y^1 + Y^2$ représentent les chaînons restants d'un noyau à 5 ou 6 chaînons contenant éventuellement d'autres hétéroatomes et

les noyaux A, B et C ainsi que les restes cités pouvant être substitués par un halogène ou un groupe hydroxy, alcoxy, aryloxy, arylalcoxy, hétéroaryloxy, aryle, hétéroaryle, alkylmercapto, arylmercapto, arylalkylmercapto, alkylsulfonyle, cyano, carbamoyle, alcoxycarbonyle, un groupe amino éventuellement substitué par 1 ou 2 groupes alkyles, aryles ou arylalkyles ou un groupe alcényloxy, alkylcarbonyloxy ou arylcarbonyloxy et les noyaux A, B et C pouvant en outre être substitués par un reste alkyle, arylalkyle, nitro, alcényle ou arylvinyle.

2. 4,4-Diaryl-dihydroquinazolones chromogènes selon la revendication 1, de formule

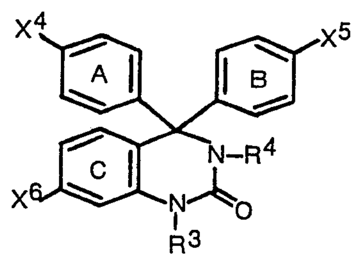

dans laquelle

l'un des restes $X^4$, $X^5$ ou $X^6$ représente $NY^4Y^5$ et les autres représentent chacun indépendamment l'hydrogène, un halogène ou un groupe alkyle en $C_1$—$C_{12}$, un groupe phényle éventuellement substitué par le chlore et/ou un reste alkyle en $C_1$—$C_{12}$, un groupe alcanoylamino en $C_1$—$C_{12}$, un groupe benzoylamino éventuellement substitué par le chlore et/ou un reste alkyle en $C_1$—$C_{12}$, un groupe $NY^4Y^5$, $OY^6$ ou $SY^6$,

$R^3$ représente l'hydrogène ou un groupe alkyle en $C_1$—$C_{12}$, un groupe cyclohexyle ou un reste benzyle ou phényle éventuellement substitué par le chlore et/ou un reste alkyle en $C_1$—$C_{12}$,

$R^4$ représente l'hydrogène, un groupe alkyle en $C_1$—$C_{30}$ éventuellement substitué par chloro, cyano, (alcoxy en $C_1$—$C_4$)carbonyle et/ou alcoxy en $C_1$—$C_4$, cyclohexyle éventuellement substitué par chloro et/ou alkyle en $C_1$—$C_4$, benzyle éventuellement substitué par nitro, chloro, alkyle en $C_1$—$C_4$ et/ou alcoxy en $C_1$—$C_4$, un reste phényle, naphtyle, picolyle, pyridyle, pyrimidyle, pyrazinyle, triazinyle, triazolyle, thiadiazolyle, tétrazolyle, imidazole ou benzimidazole, oxazole ou benzoxazole, thiadiazole ou benzothiazole éventuellement substitué par chloro, bromo, nitro, alkyle en $C_1$—$C_4$, alcoxy en $C_1$—$C_4$, alkylthio en $C_1$—$C_4$, mono ou bis-di(alkyl en $C_1$—$C_4$)amino, alkylsulfonyle en $C_1$—$C_4$, cyano et/ou (alcoxy en $C_1$—$C_4$)carbonyle

$Y^4$, $Y^5$ et $Y^6$ représentent chacun indépendamment l'hydrogène ou un groupe alkyle en $C_1$—$C_8$ éventuellement substitué par chloro, cyano, (alcoxy en $C_1$—$C_4$)carbonyle ou alcoxy en $C_1$—$C_4$, un groupe cyclohexyle ou un groupe phényle ou benzyle qui peuvent être substitués par chloro, alkyle en $C_1$—$C_4$ ou

alcoxy en $C_1$—$C_4$, ou bien les chaînons nécessaires pour compléter un système cyclique de formules suivantes:

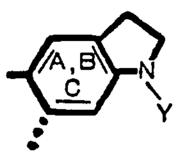 , 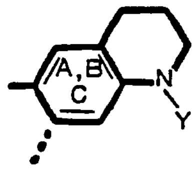 , 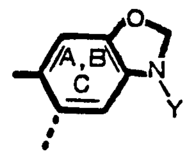 , 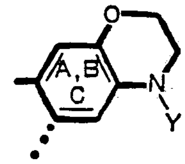

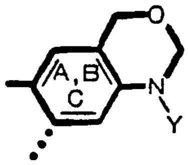 , 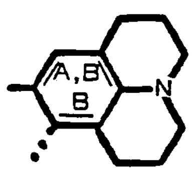 , 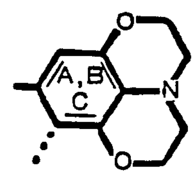 , 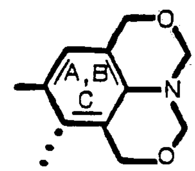

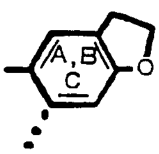 , 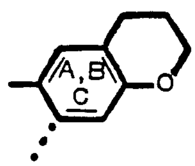 , 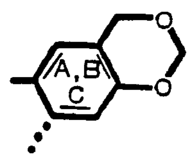 , 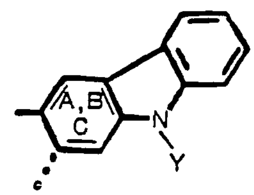

dans lesquelles

le trait interrompu représente l'autre condensation de noyaux dans le cas du noyau C,

Y représente l'hydrogène ou un groupe alkyle en $C_1$—$C_8$ éventuellement substitué par chloro, cyano, (alcoxy en $C_1$—$C_4$)carbonyle ou alcoxy en $C_1$—$C_4$, un groupe cyclohexyle ou un groupe phényle ou benzyle qui peuvent être substitués par chloro, alkyle en $C_1$—$C_4$ ou alcoxy en $C_1$—$C_4$,

la portion saturée du cycle peut porter jusqu'à 4 restes choisis parmi chloro, alkyle en $C_1$—$C_4$, alcoxy en $C_1$—$C_4$ et phènyle,

les noyaux A, B, C peuvent être substitués par chloro, alkyle en $C_1$—$C_4$, alcoxy en $C_1$—$C_4$ et/ou (alcanoyl en $C_1$—$C_4$)amino, ou bien

$NY^4Y^5$ représente un reste pyrrolo, pyrrolidino, pipéridino, pipécolino, morpholino, pyrazolo ou pyrazolino éventuellement substitué par chloro, alkyle en $C_1$—$C_4$ ou aryle, en particulier phényle.

3. 4,4-Diaryl-dihydroquinazolone de formule selon la revendication 2, dans laquelle deux des restes $X^4$, $X^5$ et $X^6$ représentent $NY^4Y^5$ et

$X^4$, $X^5$ et $X^6$ représentent $X^{4'}$, $X^{5'}$ et $X^{6'}$ respectivement = l'hydrogène, le chlore, le brome ou un groupe alkyle en $C_1$—$C_4$, phényle éventuellement substitué par chloro et/ou alkyle en $C_1$—$C_4$, alcanoylamino en $C_1$—$C_4$, benzoylamino éventuellement substitué par chloro et/ou alkyle en $C_1$—$C_4$, $OY^{6'}$ ou $SY^{6'}$,

$R^3$ représente $R^{3'}$ = l'hydrogène ou un groupe alkyle en $C_1$—$C_4$,

$R^4$ représente $R^{4'}$ = l'hydrogène ou un groupe alkyle en $C_1$—$C_{12}$ éventuellement substitué par chloro ou alcoxy en $C_1$—$C_4$, cyclohexyle, benzyle éventuellement substitué par chloro et/ou alkyle en $C_1$—$C_4$, un reste phényle, naphtyle, picolyle, pyridyle, pyrimidyle, pyrazinyle, triazinyle, triazolyle, thiadiazolyle, tétrazolyle, imidazole ou benzimidazole, oxazole ou benzoxazole ou thiazole ou benzothiazole éventuellement substitué par chloro, bromo, nitro, alkyle en $C_1$—$C_4$, alcoxy en $C_1$—$C_4$, alkylthio en $C_1$—$C_4$, di(alkyl en $C_1$—$C_4$)amino, alkylsulfonyle en $C_1$—$C_4$, cyano et/ou (alcoxy en $C_1$—$C_4$)carbonyle,

$Y^4$, $Y^5$ et $Y^6$ représentent $Y^{4'}$, $Y^{5'}$ et $Y^{6'}$ respectivement = indépendamment l'un de l'autre l'hydrogène, un groupe alkyle en $C_1$—$C_4$ éventuellement substitué par chloro, méthoxycarbonyle, méthoxy ou éthoxy, un groupe cyclohexyle, un groupe benzyle ou phényle qui peuvent être substitués par chloro, méthyle ou méthoxy, ou bien $Y^{4'}$, $Y^{5'}$ et $Y^{6'}$ représentent les chaînons qui complètent les systèmes cycliques indiqués sous $Y^4$, $Y^5$ et $Y^6$ à la revendication 2.

4. 4,4-Diaryl-dihydroquinazolones chromogènes selon la revendication 1, de formule

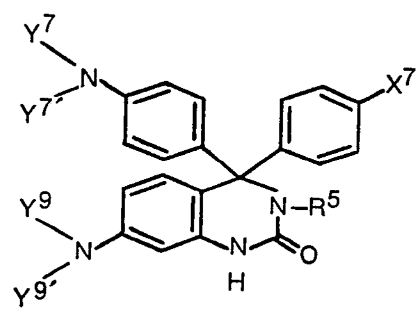

dans laquelle

$R^5$ représente un groupe méthyle, éthyle, 1-propyle, 2-propyle, 2-méthyl-1-propyle, 1-butyle, 2-butyle, 2,2-diméthyl-1-propyle, 1-pentyle, 2-pentyle, 1-hexyle, 1-dodécyle, 1-tétradécyle, 1-hexadécyle, 1-octadécyle, 2-bornylméthyle, cyclohexyle, benzyle, phényle, 2-, 3- ou 4-tolyle, 2-, 3- ou 4-anisyle, 2-, 3- ou 4-chlorophényle, 2-, 3- ou 4-nitrophényle, 2-, 3- ou 4-cyanophényle, 2-, 3- ou 4-trifluorométhylphényle, 3- ou 4-méthoxycarbonylphényle, 3- ou 4-méthoxysulfonylphényle, 2,4-dinitrophényle, 3-chloro-4-trifluorométhylphényle, 2-chloro-4-nitrophényle, 3-chloro-4-nitrophényle, 5-chloro-2-méthyl-4-nitrophényle, 4-chloro-3-méthylphényle, 3,4-dicyanophényle, 2,5-dichloro-4-cyanophényle, 4-pyridyle, benzothiazolyle, 5-méthylbenzoxazolyle, 4,5,6-trichloro-2-pyrimidyle,

$X^7$ représente $NY^8Y^{8'}$ ou l'hydrogène, méthoxy, éthoxy, propoxy, benzyloxy, méthylthio ou éthylthio,

$Y^7$ à $Y^9$ représentent méthyle, éthyle, cyanoéthyle, méthoxyéthyle, méthoxycarbonyléthyle, benzyle ou phényle,

$Y^{7'}$ à $Y^{9'}$ représentent l'hydrogène, méthyle, éthyle, cyanoéthyle, méthoxyéthyle, méthoxycarbonyléthyle, benzyle ou phényle.

5. 4,4-Diaryl-dihydroquinazolones chromogènes selon la revendication 1, de formule

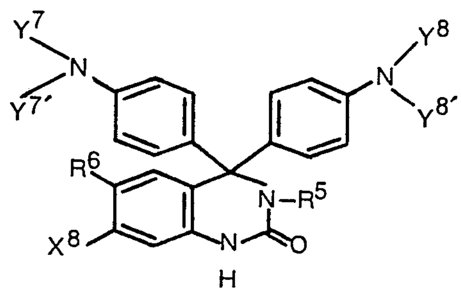

dans laquelle

$R^6$ représente l'hydrogène, chloro, méthyle ou méthoxy et

$R^8$ représente l'hydrogène, chloro, méthyle, éthyle, propyle, butyle, benzyle, méthoxy, éthoxy, propoxy, benzyloxy, méthylthio, éthylthio, acétylamino, benzoylamino ou $NHCONHR^5$,

$R^6$ et $R^8$ ne représentent pas simultanément l'hydrogène et

$R^5$, $Y^7$ et $Y^8$ ont la signification indiquée à la revendication 4.

6. Procédé pour la fabrication d'une 4,4-diaryl-dihydroquinazolone selon la revendication 1, caractérisé en ce que l'on fait réagir une urée de formule

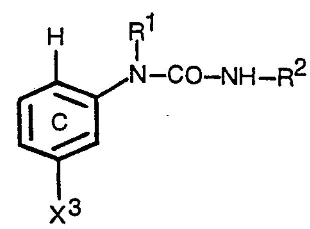

avec une cétone de formule

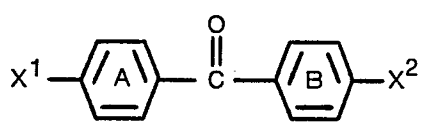

dans lesquelles

$X^1$, $X^2$, $X^3$, $R^1$, $R^2$, A, B et C ont la signification indiquée à la revendication 1.

7. Procédé pour la fabrication d'une 4,4-diaryl-dihydroquinazolone selon la revendication 1, caractérisé en ce que l'on oxyde un composé leuco de formule

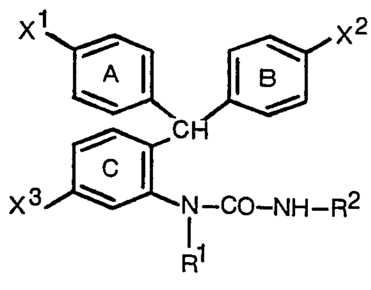

dans laquelle

$X^1$, $X^2$, $X^3$, $R^1$, $R^2$, A, B et C ont la signification indiquée à la revendication 1.

8. Utilisation d'une 4,4-diaryl-dihydroxyquinazolone de formule selon la revendication 1 comme composé chromogène dans un matériau de reproduction sensible à la pression ou à la chaleur.

9. Matériau de reproduction sensible à la pression ou à la chaleur, caractérisé en ce qu'il contient dans son système de réactifs au moins une 4,4-diaryl-dihydroxyquinazolone de formule selon la revendication 1 comme composé chromogène.

## Claims

1. Chromogenic 4,4-diaryl-dihydroquinazolones of the formula

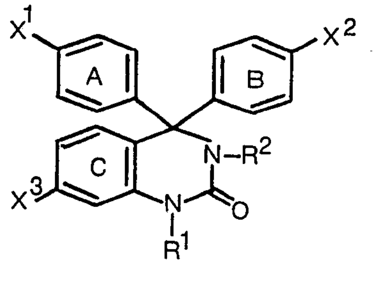

wherein

$X^1$, $X^2$ and $X^3$ independently of one another represent hydrogen, halogen, alkyl, aryl, alkanoylamino, aroylamino, $NY^1Y^2$, $OY^3$ or $SY^3$,

and wherein

at least one of the radicals

$X^1$, $X^2$ or $X^3$ represents $NY^1Y^2$, $OY^3$ or $SY^3$,

$R^1$ denotes hydrogen, alkyl, cycloalkyl, aralkyl or aryl,

$R^2$ denotes hydrogen, alkyl, cycloalkyl, aralkyl, aryl, hetaralkyl or hetaryl,

$Y^1$, $Y^2$ and $Y^3$ independently of one another denote hydrogen, alkyl, cycloalkyl, aralkyl or aryl or the remaining members of a 5-membered or 6-membered ring which reaches to one of the benzene-C atoms in the o-position and optionally contains further hetero atoms, or

$Y^1$ + $Y^2$ denote the remaining members of a 5-membered or 6-membered ring which optionally contains further hetero atoms, and

the rings A, B and C and the radicals mentioned can be substituted by halogen, hydroxyl, alkoxy, aryloxy, aralkoxy, hetaryloxy, aryl, hetaryl, alkylmercapto, arylmercapto, aralkylmercapto, alkylsulphonyl, cyano, carbamoyl, alkoxycarbonyl, amino which is optionally substituted by 1 or 2 alkyl, aryl or aralkyl groups, said rings and radicals can also be substituted by alkenyloxy, alkyl-carbonyloxy or arylcarbonyloxy and in addition the rings A, B and C can be substituted by alkyl, aralkyl, nitro, alkenyl or arylvinyl.

2. Chromogenic 4,4-diaryl-dihydroquinazolones according to Claim 1, of the formula

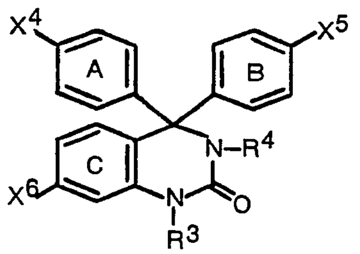

wherein

one of the radicals $X^4$, $X^5$ or $X^6$ represents $NY^4Y^5$ and the others independently of one another denote hydrogen, halogen, $C_1$- to $C_{12}$-alkyl, phenyl which is optionally substituted by chlorine and/or $C_1$- to $C_{12}$-alkyl, $C_1$- to $C_{12}$-alkanoylamino, benzoylamino which is optionally substituted by chlorine and/or $C_1$- to $C_{12}$-alkyl, $NY^4Y^5$, $OY^6$ or $SY^6$,

$R^3$ denotes hydrogen, $C_1$- to $C_{12}$-alkyl, cyclohexyl or benzyl or phenyl radicals, each of which is optionally substituted by chlorine and/or $C_1$- to $C_4$-alkyl,

$R^4$ denotes hydrogen, $C_1$- to $C_{30}$-alkyl which optionally carries chlorine, cyano, $C_1$- to $C_4$-alkoxycarbonyl and/or $C_1$—$C_4$-alkoxy, cyclohexyl which optionally carries chlorine and/or $C_1$- to $C_4$-alkyl, benzyl which optionally carries nitro, chlorine, $C_1$- to $C_4$-alkyl and/or $C_1$- to $C_4$-alkoxy, or phenyl, naphthyl, picolyl, pyridyl, pyrimidyl, pyrazinyl, triazinyl, triazolyl, thiadiazolyl, tetrazolyl, optionally benzo-fused imidazole, oxazole or thiazole radicals, each of which optionally carries chlorine, bromine, nitro, $C_1$- to $C_4$-alkyl, $C_1$- to $C_4$-alkoxy, $C_1$- to $C_4$-alkylthio, mono- or di-$C_1$- to $C_4$-dialkylamino, $C_1$- to $C_4$-alkylsulphonyl, cyano and/or $C_1$- to $C_4$-alkoxycarbonyl,

$Y^4$, $Y^5$ and $Y^6$ independently of one another denote hydrogen, $C_1$- to $C_8$-alkyl which is optionally substituted by chlorine, cyano, $C_1$- to $C_4$-alkoxycarbonyl or $C_1$- to $C_4$-alkoxy, cyclohexyl or phenyl or benzyl, each of which can be substituted by chlorine, $C_1$- to $C_4$-alkyl or $C_1$- to $C_4$-alkoxy, or members which are necessary to complete one of the ring systems of the following formulae

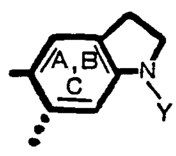 , 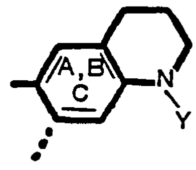 , 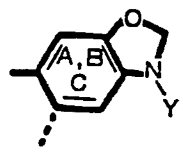 , 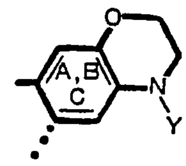

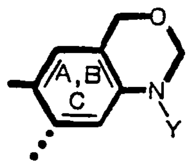 , 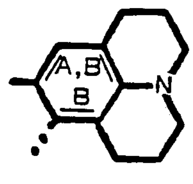 , 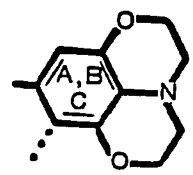 , 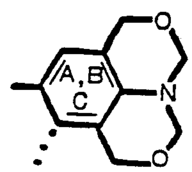

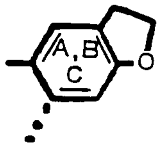 , 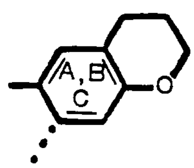 , 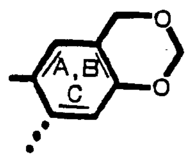 , 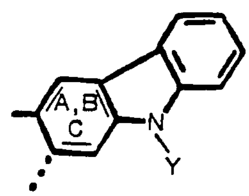

wherein

the broken line denotes further fusing in the case of ring C,

Y represents hydrogen, $C_1$- to $C_8$-alkyl which is optionally substituted by chlorine, cyano, $C_1$- to $C_4$-alkoxycarbonyl or $C_1$- to $C_4$-alkoxy, cyclohexyl or phenyl or benzyl, each of which can be substituted by chlorine, $C_1$- to $C_4$-alkyl or $C_1$- to $C_4$-alkoxy,

the saturated ring part can carry up to 4 radicals from the group comprising chlorine, $C_1$- to $C_4$-alkyl, $C_1$- to $C_4$-alkoxy and phenyl and the rings A, B and C can be substituted by chlorine, $C_1$- to $C_4$-alkyl, $C_1$- to $C_4$-alkoxy and/or $C_1$- to $C_4$-alkanoylamino, or

$NY^4Y^5$ denotes a pyrrolo, pyrrolidino, piperidino, pipecolino, morpholino, pyrazolo or pyrazolino radical, each of which is optionally substituted by chlorine, $C_1$- to $C_4$-alkyl or aryl, in particular phenyl.

3. Chromogenic 4,4-diaryl-dihydroquinazolones of the formula of Claim 2, wherein two of the radicals $X^4$, $X^5$ or $X^6$ represent $NY^4Y^5$ and

$X^4$, $X^5$ and $X^6$ represent $X^{4'}$, $X^{5'}$ and respectively, $X^{6'}$ = hydrogen, chlorine, bromine, $C_1$- to $C_4$-alkyl, phenyl which is optionally substituted by chlorine and/or $C_1$- to $C_4$-alkyl, $C_1$- to $C_4$-alkanoylamino, benzoylamino which is optionally substituted by chlorine and/or $C_1$- to $C_4$-alkyl, $OY^{6'}$ or $SY^{6'}$,

$R^3$ represents $R^{3'}$ = hydrogen or $C_1$—$C_4$-alkyl,

$R^4$ represents $R^{4'}$ = hydrogen, $C_1$- to $C_{12}$-alkyl which optionally carries chlorine or $C_1$- to $C_4$-alkoxy, cyclohexyl, benzyl which optionally carries chlorine and/or $C_1$- to $C_4$-alkyl, or phenyl, naphthyl, picolyl, pyridyl, pyrimidyl, pyrazinyl, triazinyl, triazolyl, thiadiazolyl, tetrazolyl, optionally benzo-fused imidazole, oxazole or thiazole radicals, each of which optionally carries chlorine, bromine, nitro, $C_1$- to $C_4$-alkyl, $C_1$- to $C_4$-alkoxy, $C_1$- to $C_4$-alkylthio, $C_1$- to $C_4$-dialkylamino, $C_1$- to $C_4$-alkylsulphonyl, cyano and/or $C_1$- to $C_4$-alkoxycarbonyl,

$Y^4$, $Y^5$ and $Y^6$ represent $Y^{4'}$, $Y^{5'}$ and, respectively, $Y^{6'}$ =, independently of one another, hydrogen, $C_1$- to $C_4$-alkyl which is substituted by chlorine, cyano, methoxycarbonyl, methoxy or ethoxy, cyclohexyl, benzyl or phenyl, each of which can be substituted by chlorine, methyl or methoxy, or $Y^{4'}$, $Y^{5'}$ and $Y^{6'}$ represent members which lead to the ring systems listed in Claim 2 under $Y^4$, $Y^5$ and $Y^6$.

4. Chromogenic 4,4-diaryl-dihydroquinazolones according to Claim 1, of the formula

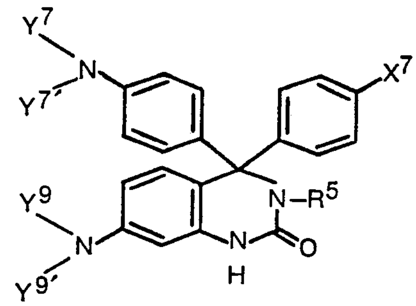

wherein,

$R^5$ denotes methyl, ethyl, 1-propyl, 2-propyl, 2-methyl-1-propyl, 1-butyl, 2-butyl, 2,2-dimethyl-1-propyl, 1-pentyl, 2-pentyl, 1-hexyl, 1-dodecyl, 1-tetradecyl, 1-hexadecyl, 1-octadecyl, 2-bornylmethyl, cyclohexyl, benzyl, phenyl, 2-, 3- or 4-tolyl, 2-, 3- or 4-anisyl, 2-, 3- or 4-chlorophenyl, 2-, 3- or 4-nitro-phenyl, 2-, 3- or 4-cyano-phenyl, 2-, 3- or 4-trifluoromethyl-phenyl, 3- or 4-methoxycarbonyl-phenyl, 3- or 4-methoxysulphonyl-phenyl, 2,4-dinitro-phenyl, 3-chloro-4-trifluoromethyl-phenyl, 2-chloro-4-nitrophenyl, 3-chloro-4-nitro-phenyl, 5-chloro-2-methyl-4-nitro-phenyl, 4-chloro-3-methyl-phenyl, 3,4-dicyano-phenyl, 2,5-dichloro-4-cyanophenyl, 4-pyridyl, benzothiazolyl, 5-methyl-benzoxazolyl or 4,5,6-trichloro-2-pyrimidyl,

$X^7$ denotes $NY^8Y^{8'}$ or hydrogen, methoxy, ethoxy, propoxy, benzyloxy, methylthio or ethylthio,

$Y^7$ to $Y^9$ denote methyl, ethyl, cyanoethyl, methoxyethyl, methoxycarbonylethyl, benzyl or phenyl and

$Y^{7'}$ to $Y^{9'}$ denote hydrogen, methyl, ethyl, cyanoethyl, methoxyethyl, methoxycarbonylethyl, benzyl or phenyl.

5. Chromogenic 4,4-diaryl-dihydroquinazolones according to Claim 1, of the formula

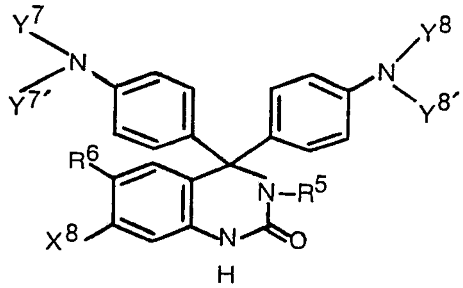

wherein

$R^6$ denotes hydrogen, chlorine, methyl or methoxy,

$X^8$ denotes hydrogen, chlorine, methyl, ethyl, propyl, butyl, benzyl, methoxy, ethoxy, propoxy, benzyloxy, methylthio, ethylthio, acetylamino, benzoylamino or $NHCONHR^5$,

and wherein

$R^6$ and $X^8$ do not simultaneously represent hydrogen, and

$R^5$, $Y^7$ and $Y^8$ have the meaning given in Claim 4.

6. Process for the preparation of a 4,4-diaryl-dihydroquinazolone of Claim 1, characterised in that a urea compound of the formula

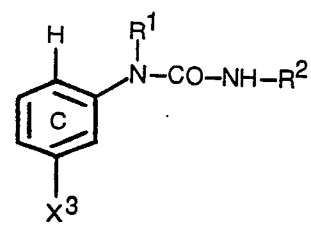

is reacted with a ketone of the formula

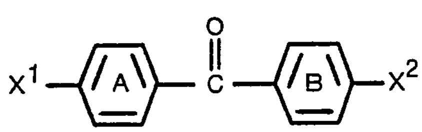

wherein

$X^1$, $X^2$, $X^3$, $R^1$, $R^2$, A, B and C have the meaning given in Claim 1.

7. Process for the preparation of a 4,4-diaryl-dihydroquinazolone of Claim 1, characterised in that a leuco compound of the formula

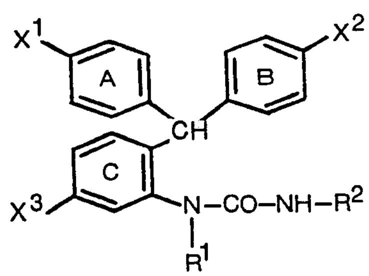

wherein

$X^1$, $X^2$, $X^3$, $R^1$, $R^2$, A, B and C have the meaning given in Claim 1,

is oxidised.

8. Use of a 4,4-diaryl-dihydroquinazolone of the formula given in Claim 1 as a colour former in a pressure-sensitive or heat-sensitive recording material.

9. Pressure-sensitive or heat-sensitive recording material, characterised in that it contains at least one 4,4-diaryl-dihydroquinazolone compound of the formula given in Claim 1 as a colour former in its reactant system.